# EUROPEAN PATENT SPECIFICATION

(11) **EP 2 190 910 B1**
(45) Date of publication and mention of the grant of the patent: **02.02.2011**
(21) Application number: 07802358.7
(22) Date of filing: 19.09.2007
(51) Int. Cl.: C08J 9/06, C08L 23/02, G10K 11/16

(54) **HIGHLY DAMPING EXPANDABLE MATERIAL AND DEVICES**
HOCHDÄMPFENDES, EXPANDIERBARES MATERIAL UND VORRICHTUNGEN
MATÉRIAU EXPANSIBLE HAUTEMENT AMORTISSANT ET DISPOSITIFS CORRESPONDANTS

(43) Date of publication of application: 02.06.2010
(73) Proprietor: Henkel AG & Co. KGaA, 40589 Düsseldorf (DE)
(72) Inventor: LECLERC, Delphine, F-58200 Cosne sur Loire (FR); MERLETTE, Nicolas, F-58150 Suilly-la-Tour (FR); WOJTOWICKI, Jean-Luc, F-58150 Pouilly sur Loire (FR)
(86) International application number: PCT/EP2007/008141
(87) International publication number: WO 2009/036784

(56) References cited:
- WO-A-02/14109
- WO-A-2007/039308

## Description

The present invention relates to a new highly damping expandable material and the use of the expanded material for damping acoustic vibrations, especially in vehicles like buses, trucks, and passenger cars. Various ways of using the material and corresponding devices are described.

In a vehicle, the transfer of vibrations generated by a dynamic force generator, such as an engine, a motor, a pump or a gear box, via structural elements to an emitting surface such as a panel, leads to the emission of structure borne noise. WO2007/039309 describes a thermally expandable material useful for adhesive, sealing and coating purposes that, when expanded, is particularly effective in reducing the transfer of vibrations generated by a vibration generator. The quoted invention provides an expandable material that, once expanded, has a Young's storage modulus E' between 0.1 MPa and 1000 MPa, a loss factor of at least 0.3 (preferably, at least 1) and preferably a shear storage modulus G' between 0.1 MPa and 500 MPa at a temperature between -10 and +40 degrees C in the frequency range 0 to 500 Hz.

Throughout the present patent application, Young's storage modulus (E') is defined as the ratio of tensile stress to tensile strain below the proportional limit of a material. Shear storage modulus G' is defined as the ratio of shearing stress to shearing strain within the proportional limit and is considered a measure of the equivalent energy stored elastically in a material. The loss factor (also sometimes referred to as the structural intrinsic damping or tan δ) is the ratio of the Young's loss modulus E" over Young's storage modulus E' for the damping in tension compression. For the damping in shear, the loss factor is the ratio of the shear loss modulus G" over the shear storage modulus G'. These values may be readily determined by Dynamic Mechanical Analysis (DMA) of a material, which in the context of this invention is the thermally expandable material after expansion. As is well known in the art, Dynamic Mechanical Analysis can be performed either by an indirect method where the material is characterized on a carrier (Oberst's beam test) or by a direct method where the tested sample is made only from the material to be characterized (viscoanalyzer).

The expandable material according to WO2007/039309 is useful in the manufacture of dissipative vibratory wave barriers as described in WO2007/039308. Such barriers comprise a carrier having an inner surface and an outer surface, the carrier having a polygonal section, especially rectangular, optionally U-shaped and comprising on its outer surface a coating of the aforementioned expandable material.

In an especially advantageous embodiment of the invention according to WO2007/039309 and WO2007/0393098, the thermally expandable material comprises:
- from 25 to 70% by weight, preferably from 35 to 55% by weight, of at least one thermoplastic elastomer (preferably a styrene/butadiene or styrene/isoprene block copolymer or at least partially hydrogenated derivative thereof);
- from 15 to 40% by weight, preferably from 20 to 35% by weight, of at least one non-elastomeric thermoplastic (preferably an ethylene/vinyl acetate or ethylene/methyl acrylate copolymer);
- from 0.01 to 2% by weight, preferably from 0.05 to 1% by weight of at least one stabilizer or antioxidant;
- from 2 to 15% by weight of at least one blowing agent, preferably an amount effective to cause the expandable material to expand at least 100% in volume when heated at a temperature of 150 degrees C;
- from 0.5 to 4% by weight of one or more curing agents, optionally including from 0.5 to 2% by weight of at least one olefinically unsaturated monomer or oligomer, and optionally
- up to 10% by weight (e.g., 0.1 to 10% by weight) of at least one tackifying resin;
- up to 5% by weight (e.g., 0.1 to 5% by weight) of at least one plasticizer;
- up to 10% by weight (e.g., 0.1 to 10% by weight) of at least one wax;
- up to 3% by weight (e.g., 0.05 to 3% by weight) of at least one activator for the blowing agent;
as well as optionally at least one filler (although the amount of filler is preferably less than 10% by weight, more preferably less than 5% by weight), the percentages being expressed as weight percentages of the total weight of the thermally expandable material.

The present invention provides an improved thermally expandable material which may be used in the manufacture of dissipative vibratory wave barriers as described in WO2007/039308. However, this material may also be used for other sound dampening applications in vehicles, e.g. for the damping of vibrations of automotive closure panels.

This application corresponds to the one disclosed in WO 02/14109. This documents describes a system for the damping of vibration in an automotive closure panel assembly, comprising: a) an intrusion device associated with an automotive exterior panel structure, and b) an expandable material for damping vibration disposed over at least a portion of said intrusion device and in contact with said intrusion device prior to expansion of said expandable material, and with a surface of said exterior panel after expansion of said expandable material. WO 02/14109 discloses heat-activated materials to be used in this invention in rather general terms. A preferred example is a polymeric foam based on ethylene copolymer or terpolymer that may possess an alphaolefin. As a copolymer or terpolymer, the the polymer is composed of two or three different monomers. Examples of particularly preferred polymers include ethylene vinyl acetate, EPDM, or a mixture thereof.

A further application of the thermally expandable material of this invention concerns cavity filler inserts. A cavity filler insert can be used for sealing and/or baffling purposes in a vehicle body. More particularly, the present invention relates to a cavity filler insert that preferably is substantially planar and that includes a high damping expandable material around substantially the entire periphery of the insert. The insert is mounted in a cavity of a vehicle body, preferably, but not necessarily utilizing an attachment member. Upon activation, the expandable material foams to form a seal around the interior cavity wall. The activated cavity filler insert is particularly effective in reducing both the vibrations transmitted through the walls of the cavity as well as the air-borne noise within the cavity.

A vehicle body typically includes a plurality of hollow structural members (such as pillars **A, B,** and **C**) that form the passenger compartment, engine compartment, trunk, doorways, windows, and wheel wells thereof. Each hollow structural member typically includes one or more interconnected cavities, and these cavities can transmit undesirable noises and vibrations to the passenger compartment of the vehicle that are caused by the power train and road upon which the vehicle travels. One conventional way of reducing these undesirable noises and vibrations is to block the cavities of the vehicle with one or more cavity filler inserts. Such cavity filler inserts may also assist in reinforcing or stiffening the hollow structural member of the vehicle.

A typical cavity filler insert employed for this purpose includes a carrier, an attachment member integrally formed with the carrier, and a thermally expandable material formed on the carrier. The cavity filler insert is typically configured so as to be similar in shape to, but somewhat smaller than, the cross-section of the cavity in which it is to be placed. The attachment member is usually configured so as to be inserted into an opening formed in one of the walls that define the cavity in order to fix the cavity filler insert to the wall. The cavity filler insert is typically positioned so that the plane of the carrier is substantially perpendicular to the longitudinal direction of the cavity. The expandable material will undergo heat-induced expansion when the vehicle body is conveyed through a baking oven that forms a part of the primer or paint curing step of the vehicle manufacturing process. This heat-induced expansion of the expandable material will fill any peripheral space between the expandable material and the walls of the cavity, with the intent that the levels of undesirable noise produced by the vehicle being transmitted to the passenger compartment thereof are reduced.

Although considerable effort has been expended to date in the development of such cavity filler inserts (often referred to as "acoustic baffles"), most such cavity filler inserts are only effective in lowering the amount of air-borne noise that is transmitted through the structural member cavity. However, it has proven to be more difficult to significantly lessen or stop so-called structure-borne noise. "Structure-borne noise" is the noise generated by an emitting surface (typically, a panel) that is largely transmitted through the structure supporting the panels (typically, a frame or other hollow structural member) and that has been generated by a dynamic force generator (such as an engine, motor, pump or gear box). Although a conventional acoustic baffle can muffle the air-borne noise within the structural member cavity, the structure-borne noise that is not stopped by the baffle continues through the cavity walls and regenerates air-borne noise within the cavity downstream of the baffle. The overall effectiveness of the acoustic baffle in eliminating noise from entering the passenger compartment by means of the frame of the vehicle is thereby compromised.

In view of the above, there exists a need for a cavity filler insert that overcomes the above-mentioned problems in the prior art. Patent application PCT/US2007/70578, unpublished at the priority date of the present patent application, offers a solution to these problems by providing a cavity filler insert which comprises the thermally expandable material disclosed in the above cited WO2007/039309.

The present invention provides a new thermally expandable material to be used, as examples, in the devices described above. It has improved overall properties compared to the material disclosed in WO2007/039309.

The state of the art comprises more documents related to thermally expandable material with sound dampening properties in the expanded state. Examples with some relation to the material of the present invention are:
US 6110958 discloses a constrained layer damping structure including a panel to be damped, a constraining layer and a layer of foam vibration damping material sandwiched there between. The foam vibration damping material is provided from a composition including 1-20 weight percent elastomeric polymer, 20-60 weight percent thermoplastic polymer, 0.5-18 weight percent tackifier, 4-23 weight percent asphalt filler, 20-50 weight percent inorganic filler and 0.2-7 weight percent blowing agent. The elastomeric polymer may be rubber such as styrene-butadiene copolymers or styrene isoprene rubber, especially polystryrene polyisoprene tri-block copolymers styrene-isoprene-styrene, (S-I-S) block copolymer. The thermoplastic polymer may be selected from e.g. ethylene vinyl acetate (EVA) and ethylene methyl acrylate. The document seems not to mention curing agents based on sulphur and/or sulphur compounds.
US 5635562 also teaches expandable vibration damping material compositions useful in constrained layer applications. The composition essentially includes an elastomeric polymer, plasticizer, thermoplastic polymer, foaming agent, adhesion promotors and filler. It may also comprise epoxy curing agents. The elastomeric polymer may be a tri-block copolymer including polystyrene blocks and vinyl bonded polyisoprene blocks. The thermoplastic polymer may comprise an ethylene-vinyl acetate copolymer, acrylics, polyethylene and polypropylene.

The present invention provides a new and improved thermally expandable material which can be used, for example, for applications and devices as described above. In a first embodiment, the present invention comprises a thermally expandable material comprising:
a) from 3 to 40 % by weight of a first thermoplastic elastomer having a first glass transition temperature,
b) from 3 to 40 % by weight of a second thermoplastic elastomer having a second glass transition temperature,
   wherein the first and the second glass transition temperature differ by at least 10 °C,
c) from 5 to 50 % by weight of at least one thermoplastic polymer selected from the group consisting of polymers and copolymers with at least one polymerizable C = C double bond,
d) from 0 to 30% by weight of at least one tackifying resin,
e) at least one latent chemical blowing agent in an amount effective to cause the expandable material to expand at least 50 % in volume when heated at a temperature of 150 °C for at least 20 minutes,
wherein the sum of components a) to e) is less than 100 % by weight, and the remainder to 100 % by weight is made up of further components or adjuvants.

The thermally expandable material is a material that will foam and expand upon heating but that is typically solid (and preferably dimensionally stable) at room temperature (e.g., 15-30 degrees C). In some embodiments, the expandable material will be dry and non-tacky, but in other embodiments it will be tacky. The thermally expandable material preferably is formulated such that it is capable of being shaped or moulded (e.g., by injection moulding or extrusion) into the desired form for use, such shaping or moulding being carried out at a temperature above room temperature that is sufficient to soften or melt the expandable material so that it can be readily processed but below the temperature at which expansion of the expandable material is induced. Cooling the shaped or moulded expandable material to room temperature yields a solid having the desired shape or form. Upon activation, i.e., upon being subjected to a temperature of between about 130°C and 240°C (depending on the exact formulation of expandable material that is used), the expandable material will typically expand by at least about 50 % or at least 100% or at least about 150% or alternatively at least about 200% of its original volume. Even higher expansion rates (e.g., at least about 1000%) may be selected where required by the desired end use. When used in an automobile body, for example, the expandable material typically has an activation temperature lower than the temperature at which primer or paint is baked on the vehicle body during manufacture.

Expansion of the thermally expandable material is achieved by a heating step, wherein the thermally expandable material is heated for a time and at a temperature effective to activate the blowing agent and also any curing agent that may be present.

Depending on the nature of the thermally expandable material and the line conditions at the assembly line, the heating step is typically carried out at a temperature from 130°C to 240°C, preferably from 150°C to 200°C, with a residence time in the oven from about 10 min. to about 30 min.

It is advantageous to take benefit of the heating step that follows the passage of the vehicle parts in the generally used electro coating bath (E-coat bath) to cause expansion of the thermally expandable material as the temperature during this heating step is generally sufficient to cause the expected expansion.

The feature of using two different thermoplastic elastomers the glass transition temperatures of which differ by at least 10 °C is based on the observation that the desired high values for the loss factor tan δ (at least higher than 0.5, preferably higher than 0.8, more preferably higher than 1) can be obtained over a broader range of temperatures than by using one thermoplastic elastomer alone. The absolute values of the glass transition temperatures which are to be selected depend from the range of typical working temperatures for the device to be damped. If the device is, for example, a passenger car, the temperature range in which most efficient damping is desired is outside ambient temperature, especially the temperature range from -25 to + 45 °C. In this case, the glass transition temperatures of the two different thermoplastic elastomers should both lie within this temperature range. If, on the other hands, machine parts should be damped which become hot during use, e.g. with temperatures in the range of 50 to 100 °C, the glass transition temperatures of the two different thermoplastic elastomers should both lie within this higher temperature range.

Preferably, the first thermoplastic elastomer a) and/or the second thermoplastic elastomer b) is selected from the group consisting of thermoplastic polyurethanes, styrene/butadiene block copolymers, hydrogenated styrene/butadiene block copolymers, styrene/isoprene block copolymers, and hydrogenated styrene/isoprene block copolymers. Especially, components a) and b) are selected from styrene/isoprene/styrene tri-block copolymers (SIS), and hydrogenated styrene/isoprene/styrene tri-block copolymers.

Especially efficient damping properties in the temperature range between about 0 °C and about 30 °C (if, for example, structures of vehicles are to be damped which operate at outside ambient temperature) are obtained if the first thermoplastic elastomer a) has a glass transition temperature in the range from -25 to 0.0 °C, preferably from -20 to - 5 °C and/or if the second thermoplastic elastomer b) has a glass transition temperature in the range from 0.1 to 30 °C, preferably from 4 to 20 °C. Most preferably, the first thermoplastic elastomer a) has a glass transition temperature in the range from - 15 to - 10 °C and/or the second thermoplastic elastomer b) has a glass transition temperature in the range from 5 to 15 °C.

The thermoplastic elastomers a) and b) are preferably both selected from styrene/isoprene/styrene tri-block copolymers (SIS), and hydrogenated styrene/isoprene/styrene tri-block copolymers. The non-hydrogenated tri-block copolymers are especially preferred. The styrene content is preferably in the range of 15 to 25 % by weight, more preferably in the range of 19 to 21 % by weight. Especially suitable block copolymers include styrene/isoprene/styrene triblock polymers, as well as fully or partially hydrogenated derivatives thereof, in which the polyisoprene block contains a relatively high proportion of monomer moieties derived from isoprene having a 1,2 and/or 3,4 configuration. Preferably, at least about 50% of the polymerized isoprene monomer moieties have 1,2 and/or 3,4 configurations, with the remainder of the isoprene moieties having a 1,4 configuration. This microstructure is believed to contribute to the good dampening properties. Such block copolymers are available from Kuraray Co., Ltd. under the trademark HYBRAR and may also be prepared using the methods described in U.S. Pat. No. 4,987,194, incorporated herein by reference in its entirety. Suitable materials are: Hybrar® 5127 for the thermoplastic elastomer a), and Hybrar® 5125 for the thermoplastic elastomer b).

Component c) improves the processability, especially the extrusion behavior of the thermally expandable material. The presence of a C = C double bond (or a corresponding triple bond which is deemed to be equivalent to a double bond in this respect) is essential for the curing behavior of this component. Polymers or co-polymers with vinyl acetate or (meth)acrylate units are preferred. More preferably, at least one thermoplastic polymer c) is selected from the group consisting of ethylene/vinyl acetate copolymers and ethylene/methyl acrylate copolymers. An ethylene/vinyl acetate copolymer is preferred which has a vinyl acetate content in the range of 24 to 32 mole-%, more preferably in the range of 27 to 29 mole-%.

Preferably, the thermally expandable material comprises at least one tackifying resin d) which is preferably present in an amount of from 1 to 20 % by weight. The tackifying resin d) may be selected within the group consisting of rosin resins, terpene resins, terpene phenolic resins, hydrocarbon resins derived from cracked petroleum distillates, aromatic tackifying resins, tall oil resins, ketone resins and aldehyde resins. Suitable rosin resins are abietic acid, levopimaric acid, neoabietic acid, dextropimaric acid, palustric acid, alkyl esters of the aforementioned rosin acids, and hydrogenation products of rosin acid derivatives. Preferably, it is selected from aliphatic hydrocarbon resins. The molecular weight (number average) may be in the range of 1000 to 2000. The softening point (measured according to ASTM D-6090-97) may be in the range of 95 to 105 °C. A suitable material is Escorez® 1102 of ExxonMobile.

The thermally expandable material may be pre-cured or cured before blowing ("foaming") by irradiation with actinic radiation, e.g. by visible or UV light, or gamma or electron radiation. In addition to or instead of this physical curing step, the material may be cured by at least one chemical curing agent, which is present in the material as an additional component f). Suitable curing agents include substances capable of inducing free radical reactions, for example organic peroxides including ketone peroxides, diacyl peroxides, peresters, perketals, hydroperoxides and others such as cumene hydroperoxide, bis(tert-butylperoxy) diisopropylbenzene, di(-2-tert-butyl peroxyisopropyl benzene), 1,1-di-tert-butylperoxy-3,3,5-trimethylcyclohexane, dicumyl peroxide, t-butylperoxybenzoate, di-alkyl peroxydicarbonates, di-peroxyketals (such as 1,1-di-tert-butylperoxy-3,3,5-trimethylcyclohexane), ketone peroxides (e.g., methylethylketone peroxide), and 4,4- di-tert-butylperoxy n-butyl valerate.

However, curing agents based on sulphur and/or sulphur compounds are preferred, as they lead to several advantages: "overburning" at temperatures above about 200 °C or at prolonged curing times in the paint bake oven at line stops is reduced, higher expansion rates are obtained, and the loss factor tan δ becomes nearly independent from the curing temperature. For these reasons it is preferred that the thermally expandable material contains at least one chemical curing agent f) based on sulphur and/or sulphur compounds, preferably a mixture of elemental sulphur and at least one organic di- or polysulfide. The preferred organic sulfide is tetramethylthiuram disulfide.

The curing agent is preferably a latent curing agent, that is, a curing agent that is essentially inert or non-reactive at room temperature but is activated by heating to an elevated temperature (for example, a temperature within the range of from about 130 degrees C to about 240 degrees C).

For an optimised composition it is preferred that at least one of the following conditions is met for the relative amounts of the components:
component a) is present in an amount of from 5 to 20 % by weight, preferably of from 8 to 16 % by weight;
component b) is present in an amount of from 15 to 40 % by weight, preferably of from 20 to 35 % by weight;
component c) is present in an amount of from 10 to 25 % by weight, preferably of from 12 to 20 % by weight;
component d) is present in an amount of from 2 to 10 % by weight, preferably of from 3 to 8 % by weight;
component e) is present in an amount of from 1 to 20 % by weight, preferably of from 2 to 10 % by weight;
a chemical curing agent f) is present in an amount of from 0.2 to 5 % by weight, preferably of from 0.7 to 2 % by weight,
wherein the sum of components a) to f) is less than 100 % by weight, and the remainder to 100 % by weight is made up of further components or adjuvants.

In an especially preferred embodiment, the present invention comprises a thermally expandable material comprising:
a) from 5 to 20 % by weight of a first thermoplastic elastomer selected from the group consisting of thermoplastic polyurethanes, styrene/butadiene block copolymers, hydrogenated styrene/butadiene block copolymers, styrene/isoprene block copolymers, and hydrogenated styrene/isoprene block copolymers, which has a glass transition temperature in the range from -25 to 0.0 °C,
b) from 15 to 40 % by weight of a second thermoplastic elastomer selected from the group consisting of thermoplastic polyurethanes, styrene/butadiene block copolymers, hydrogenated styrene/butadiene block copolymers, styrene/isoprene block copolymers, and hydrogenated styrene/isoprene block copolymers, which has a glass transition temperature in the range from 0.1 to 30 °C,
c) from 10 to 25% by weight of at least one thermoplastic polymer selected from the group consisting of ethylene/vinyl acetate copolymers and ethylene/methyl acrylate copolymers,
d) from 2 to 10% by weight of at least one tackifying resin,
e) at least one latent chemical blowing agent in an amount effective to cause the expandable material to expand at least 50% in volume , preferably at least 100 % in volume when heated at a temperature of 150 °C for at least 20 minutes,
f) from 0.5 to 4% by weight of at least one curing agent based on sulphur and/or sulphur compounds,
wherein the sum of components a) to f) is less than 100 % by weight, and the remainder to 100 % by weight is made up of further components or adjuvants.

The material according to this embodiment of the present invention exhibits several advantages over materials according to the state of the art. For example:
- All the other components being the same, the composition according to the invention with the curing agent based on sulfur and/or sulfur compounds has a higher expansion rate than an analogous composition using a peroxide curing system;
- The curing agent based on sulfur and/or sulfur compounds improves the thermal stability compared with a peroxide curing system. A comparable composition using a peroxide curing system thermally decomposes on curing at a temperature above 200 °C;
- The combination of two thermoplastic elastomers with different glass transition temperature together with a curing agent based on sulfur and/or sulfur compounds leads to a nearly constant loss factor tan δ over a range of curing temperatures between 140 °C and 210 °C;
- The combination of two thermoplastic elastomers with different glass transition temperature results in efficient damping properties in the temperature range between about 0°C and about 30 °C which are independent from the curing temperature.

All known blowing agents, such as "chemical blowing agents" which liberate gases by decomposition or "physical blowing agents", i.e., expanding hollow beads (also sometimes referred to as expandable microspheres), are suitable as blowing agent e) in the present invention. Mixtures of different blowing agents may be used to advantage; for example, a blowing agent having a relatively low activation temperature may be used in combination with a blowing agent having a relatively high activation temperature.

Examples of "chemical blowing agents" include azo, hydrazide, nitroso and carbazide compounds such as azobisisobutyronitrile, azodicarbonamide, di-nitroso-pentamethylenetetramine, 4,4'-oxybis(benzenesulfonic acid hydrazide), diphenyl-sulfone-3,3'-disulfohydrazide, benzene-1,3-disulfohydrazide and p-toluenesulfonyl semicarbazide. An especially preferred blowing agent is azodicarbonamide.

"Chemical blowing agents" may benefit from the presence of additional catalysts or activators such as zinc compounds (e.g., zinc oxide), (modified) ureas and the like.

However, "physical blowing agents" and particularly expandable hollow microbeads (sometimes referred to as microspheres) are also useable. Advantageously, the hollow microbeads are based on polyvinylidene chloride copolymers or acrylonitrile/ (meth)acrylate copolymers and contain encapsulated volatile substances such as light hydrocarbons or halogenated hydrocarbons. Suitable expandable hollow microbeads are commercially available, e.g., under the trademarks "Dualite" and "Expancel" respectively, from Pierce & Stevens (now part of Henkel Corporation) or Akzo Nobel, respectively.

The composition of this invention also comprises one ore more further components or adjuvants, preferably selected from one ore more of:
g) from 5 to 40 % by weight, especially from 10 to 30 % by weight fillers,
h) from 2 to 20 % by weight, especially from 2 to 10 % by weight plasticizer,
i) from 1 to 5 % by weight curing catalyst,
k) from 0.05 to 3 % by weight anti-oxidant and/or stabilizer,
l) from 0.05 to 5 % by weight, especially from 0.05 to 3 % by weight accelerator agent,
m) from 1 to 10 % by weight, especially from 1 to 5 % by weight urea.

Examples of suitable fillers g) include ground and precipitated chalks, talc, calcium carbonate, carbon black, calcium-magnesium carbonates, barite, clay, mica, and silicate fillers of the aluminum-magnesium-calcium type, such as wollastonite and chlorite. The filler particles may have a particle size in the range of 25 to 250 µm. The total amount of filler may be in the range from 15 to 25 % by weight. However, it may also be limited to less than 10% by weight, even less than 5% by weight. In one embodiment, the expandable material contains no filler (defined herein as substantially inorganic particles, such as particles of the materials mentioned above).

Examples of suitable plasticizers h) include C₁₋₁₀ alkyl esters of dibasic acids (e.g., phthalate esters), diaryl ethers, benzoates of polyalkylene glycols, organic phosphates, and alkylsulfonic acid esters of phenol or cresol. For example, diisononylphthalate may be used as plasticizer.

Zinc oxide, optionally in activated form, is preferably used as the curing catalyst i).

Suitable antioxidants and stabilizers k) include sterically hindered phenols and/or thioethers, sterically hindered aromatic amines and the like. Phenolic anti-oxidants are preferred.

Suitable accelerator agents l) may be selected from thiazoles and sulfenamides. It is especially preferred to use N-N'-dicyclohexyl-2-benzothiazolesulfenamid in combination with 2-mercaptobenzothiazole.

The special combination of preferred blowing agent, curing agent, curing catalyst and curing accelerators leads to a closed-cell foam after expansion of the material by heating. The preferred selection of polymers a) and b) which are at least partly film-forming also contributes to the formation of a closed-cell foam, as the polymers are stretched without rupture during the foaming process. A closed-cell foam is preferred as it cannot be filled with or penetrated by water.

In addition, the combination of the preferred components of the thermally expandable material leads to other desired properties after expansion: The water absorption (22 hours in water at room temperature) is less than 10 % by weight of the expanded material; the expanded material has a good adhesion on e-coat; it is not corrosive to bare steel.

In certain embodiments of the invention, the components of the thermally expandable material are selected such that the expandable material is free or substantially free of any thermosettable resin such as an epoxy resin (e.g., the expandable material contains less than 5 % or less than 1% by weight epoxy resin).

The present invention provides an improved expandable material that, once expanded by heating at a temperature in the range of 130 to 240 °C, has a Young's storage modulus E' between 0.1 MPa and 1000 MPa, a loss factor tan δ higher than 0.5 (preferably, at least 1) and preferably a shear storage modulus G' between 0.1 MPa and 500 MPa, the loss factor and the shear storage modulus being measured at a temperature between -10 and +50 °C in the frequency range 0 to 500 Hz.

The uncured thermally extendable material can be put into a desired shape by extrusion and cutting, or by injection moulding at temperatures in the range of 60 to 80 °C. For shipping purposes it can be extruded (e.g. onto a cold metal tape) and granulated. At the point of use, the granules can be softened again by heating at temperatures in the range of 60 to 80 °C in order to be shaped by extrusion or injection moulding.

This expandable material is useful in the manufacture of dissipative vibratory wave barriers as described in WO2007/039308. Therefore, the present invention provides, in a second aspect, a dissipative vibratory wave barrier comprising a carrier having an inner surface and an outer surface, wherein a coating comprising a thermally expandable material according to the present invention is present on at least one of said inner surface or said outer surface.

The "dissipative vibratory wave barrier" blocks the transmission of structure-borne noise in vehicles and the like from its sources (engine, suspension system, exhaust system, accessories) to the sound-producing radiating panels (the flat panels connected to the frame, like the panels surrounding the passenger compartment) through the transmission path: the frame or the hollow-body network. The dissipative vibratory wave barrier is introduced into the transmission path as close as possible to noise source.

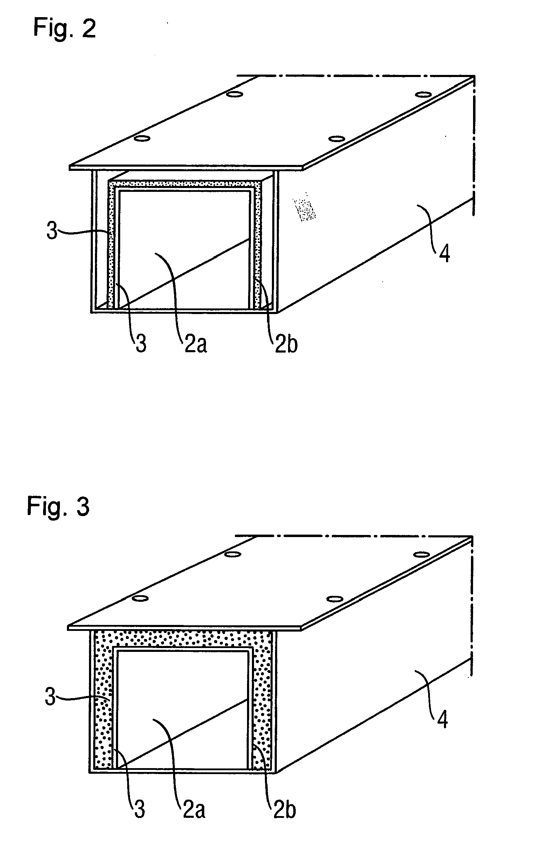

This effect is schematically shown in Fig. 2: The upper drawing shows a section of the hollow frame of a car without the vibration barrier. Vibrations which are injected into the hollow frame from a source are guided along the walls of the frame without significant damping. The vibrations are then transmitted to the radiating panels, generating noise.

The lower part of the drawing shows the effect of the dissipative vibratory wave barrier introduced into the transmission path (in the expanded state): The vibrations are dissipated in the expanded foam which is constrained between the walls of the frame and the outer surface of the carrier. This reduces the amplitudes of the vibrations in the frame considerably.

The dissipative vibratory wave barrier according to the present invention comprises a carrier having an inner surface and an outer surface, the carrier having a polygonal section, especially rectangular, optionally U-shaped and comprising on its outer surface a coating comprising the thermally expandable material of this invention. Reference is made to figures 1 to 4 of WO2007/039308 which demonstrate how this vibratory wave barrier may look like before and after expansion of the thermally expandable material, and give a schematic perspective view of the dissipative vibratory wave barrier after insertion into a structural element and after expansion of the thermally expandable material. The same configurations can be used with the thermally expandable material of this invention.

Figure 2 is a schematic perspective view of a dissipative vibratory wave barrier after insertion into a structural element.

Figure 3 is a schematic perspective view of the dissipative vibratory wave barrier of figure 2 after expansion of the thermally expandable material.

The carrier selected for use in this embodiment of the present invention has an inner surface and an outer surface. In cross-section, the carrier should be polygonal in shape. Preferably, the cross-sectional shape of the carrier has at least three sides that are straight lines and/or arcs. In one embodiment, the carrier is open on one side, but in another embodiment the cross-sectional shape of the carrier is closed. For example, the carrier in cross-section may have a shape selected from the group consisting of rectangular, square, pentagonal, hexagonal, U-shaped, and D-shaped. The sides of the carrier may be equal or different in length, with the length generally being selected in accordance with the interior dimensions of the structural element into which the dissipative vibratory wave barrier is to be inserted. The carrier may be completely hollow, but in certain embodiments could have one or more interior elements such as braces, ribs, cross-walls and the like. The carrier may be designed with small tabs, legs or other protrusions on the surface or edge(s) that will face the bottom of the hollow structural element into which the dissipative vibratory wave barrier is to be inserted. These protrusions are configured to hold such surface or edge(s) away from the lower interior surface of the structural element, thereby allowing any of the liquids used in vehicle assembly operations to more completely coat or contact such lower interior surface.

In one embodiment of the invention, the carrier is straight. In other embodiments, however, the carrier may be bent or curved. In still other embodiments, the carrier may be straight in certain sections and curved in other sections. Each side of the carrier may be planar (flat), but it is also possible for a side of the carrier to contain one or more indented areas and/or one or more protruding sections. The carrier sides may be continuous (free of any openings), but in certain embodiments one or more sides of the carrier could contain one or more openings. Generally speaking, the shape and configuration of the carrier are selected so as to generally parallel or match the contours or shape of the structural element into which the dissipative vibratory wave barrier is to be inserted and to clear any elements within the structural element that might otherwise prevent the dissipative vibratory wave barrier, once coated with the thermally expandable material, from fitting within such structural element. As will be explained in more detail subsequently, it will be desirable to allow at least some clearance room between the outer surfaces of the dissipative vibratory wave barrier and the inner surfaces of the structural element.

The carrier may be made of metal. Preferred metals are steel, particularly galvanized steel, and aluminium.

The carrier may also be made of a synthetic material, which may optionally be fiber reinforced (e.g., with glass fibers) and/or reinforced with other types of fillers. Preferred synthetic materials are thermoplastic synthetic materials having a low water absorption and dimensionally stable up to at least 180°C. Suitable thermoplastic synthetic materials may, for example, be selected within the group consisting of polyamides (PA), polyphenylene sulphides (PPS), polyphenylene ethers (PPE), polyphenylene sulfones (PPSU), polyether imides (PEI) and polyphenylene imides (PPI). Thermoset synthetic materials such as moulding compounds, rigid polyurethanes, and the like may also be used to construct the carrier. The carrier may be formed into the desired shape by any suitable method, such as, for example, moulding (including injection moulding), stamping, bending, extrusion and the like.

The coating is applied to at least a part of the outer surface of the carrier but may also be applied to the whole outer surface. The coating of thermally expandable material may be continuous, although the present invention also contemplates having two or more separate portions of the thermally expandable material on the outer surface of the carrier. These portions may differ in size, shape, thickness, etc. The thermally expandable material may also be distributed over the surface of the carrier as a plurality of (small) blocks or patches.

The coating comprising the thermally expandable material may be uniform in thickness, but may also be varied in thickness over the outer surface of the carrier. Typically, the coating will be from 0.5 to 10 mm thick.

The thermally expandable material may be applied to the carrier surface by any suitable means such as extrusion, co- moulding, over- moulding, or the like. For example, the thermally expandable material may be heated to a temperature sufficient to soften or melt the material without activating the blowing agent or curing agent that may be present and the softened or melted material then extruded as a ribbon onto the outer carrier surface. Upon cooling, the ribbon of thermally expandable material then re-solidifies and adheres to the carrier surface. Alternatively, sheets of the thermally expandable material may be formed into individual portions of the desired size and shape by die-cutting, with the individual portions then being attached to the outer carrier by any suitable means such as mechanical fasteners or heating the surface of the portion that is to be contacted with the carrier surface to a temperature sufficient for the expandable material to function as a hot melt adhesive. A separately applied adhesive layer may also be used to attach the thermally expandable material to the outer surface of the carrier.

The concept would not be efficient if the carrier is not suitable. The carrier has the basic function to "carry" and guide the material before and during expansion, but it's most important function is to constrain the material after expansion by making a sandwich with the walls of the structure to be damped. This can be achieved if the carrier material (steel, nylon...) and design (ribs, stiffeners...) lead to a dynamic stiffness (torsional, flexural) in the order of the dynamic stiffness of the structure to be damped. If the carrier is too soft, it will be deformed by the displacement of the foam, itself deformed by the displacement of the structure to be damped. If it is too stiff, the dissipative vibratory wave barrier will work, but it will be oversized. The carrier has to be stiffer than the foamed damping material. Under this condition, vibrations of the structure to be damped are not transferred by the foam to the carrier and back, but are absorbed within the foam and dissipated by generating heat. This explains the term "dissipative wave barrier"

One additional condition for proper working of the carrier is that its vibratory resonant frequencies (global and local deflections shape) in contact with the damping foam must be higher than the disturbing frequency. This additional condition is specific to the dissipative vibratory wave barrier of the present invention, and differentiates it from standard pillar fillers for airborne transmission

In a third aspect, the present invention comprises a system for the damping of vibration in an automotive closure panel assembly, comprising:
a) an intrusion device associated with an automotive exterior panel structure, and
b) a thermally expandable material for damping vibration disposed over at least a portion of said intrusion device and in contact with said intrusion device prior to expansion of said expandable material, and with a surface of said exterior panel after expansion of said expandable material,
wherein the thermally expandable material of this invention is used.

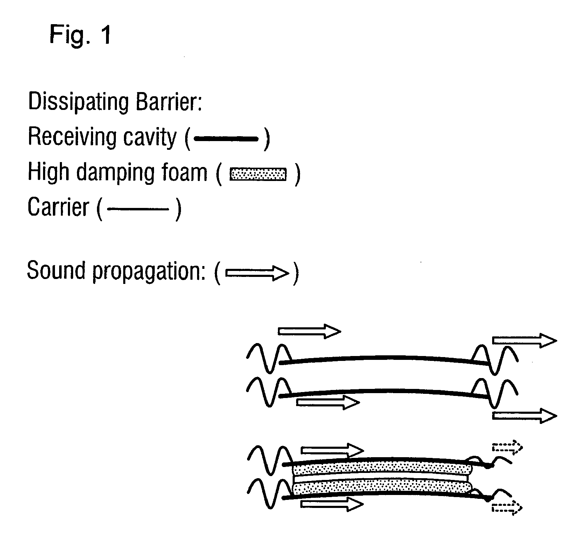

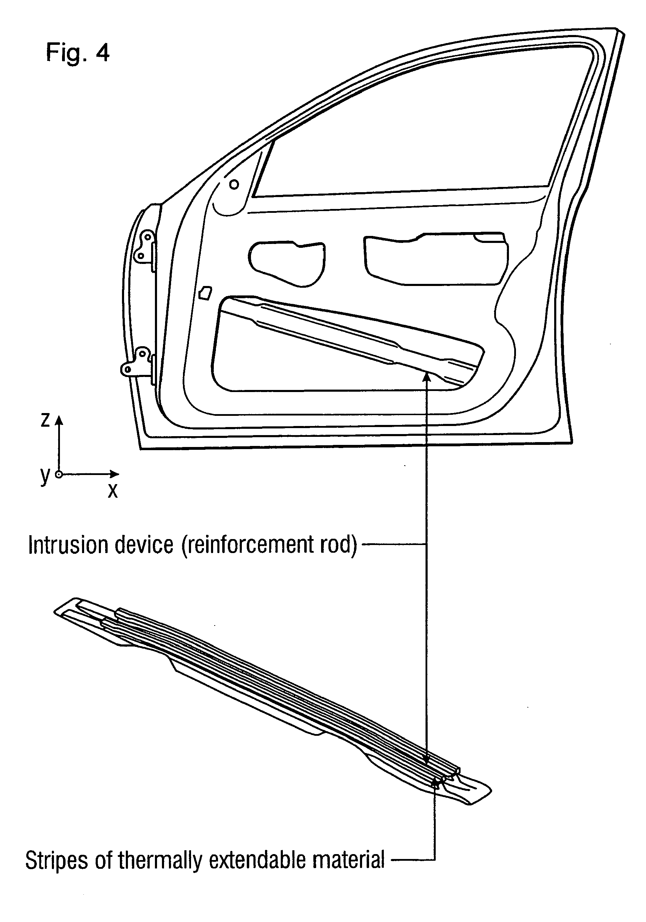

Reference is made to figures 1 and 2 of WO 02/14109 which show how this system may look like when used to damp vibrations of a car door. This is also illustrated in Fig. 4 of the present patent application.

In this embodiment, the present invention is directed to a vibration reduction system, and particularly one for automotive frame assemblies, such as (without limitation) vehicle door frame assemblies having a door intrusion device as well as any other automotive closure panel assemblies used in sliding doors, lift gates, or other designs used to facilitate the ingress and egress of passengers and/or cargo to an automotive vehicle. The system may employ extrusion techniques in the form of a mini-applicator technology for facilitating the application of an anti-vibration damping material according to this invention onto the intrusion device and/or other selected portion of the door frame, such as the belt line reinforcement, through an extrude-in-place process.

It is contemplated that the material disclosed in the present invention functions as an anti-vibration dampener when expanded and bonded to the door intrusion device and optionally the inner and outer body panels, when the intrusion device, such as a intrusion device (now attached to the vehicle in the assembly operation), is processed through paint operations and process cycles typically encountered in a vehicle assembly plant. The material is heat expandable and at least partially fills the cavity by cross-linking the door intrusion device and the inner and outer door panel during the painting operation, thereby reducing noise and vibration characteristics of the vehicle as well as producing a more quiet door assembly when the vehicle door is opened and closed.

The present invention can be utilized by either the door intrusion device manufacturer or the vehicle manufacturer and extruded onto the door intrusion device itself for use by the vehicle manufacturer in the final assembly operation.

In one embodiment, the damping material comprises a plurality of pellets or a bead that is extruded along and onto portions of the intrusion device in a solid (though pliable) form in accordance with U.S. Patent No. 5, 358,397. The pellet then expands and bonds to the intrusion device and the body panel when exposed to the e-coat process as well as other paint operation cycles encountered in a final vehicle assembly facility. In addition, it is contemplated that the present invention may utilize an application of expandable material directly to a structural member or trim component of an automotive vehicle in an automated or otherwise expedited manufacturing process which may involve heating through traditional methods as well as welding and radiation curable technology or cleaning the selected member or part prior to application to assist in adhesion of the expandable material.

In a particular non-limiting embodiment, a plurality of pellets comprised of the vibration damping material are transformed from a solid or dry chemical state to a visco-elastic stage through the use of a suitable mini-applicator which processes the pellets at a temperature sufficient to transform the pellets into a viscoelastic material capable of flowing onto the external surface of an intrusion device in a desired consistency, thickness, and pattern.

As an alternative to a plurality of pellets, the thermally expandable material according to the present invention may be disposed over at least a portion of the intrusion device in form of one or more stripe(s)

The intrusion device is then mounted within an automotive door assembly or other panel assembly by the vehicle manufacture in accordance with manufacturing techniques that are well known in the art. As the assembly is prepared before final assembly of the vehicle, it is processed through e-coat or other heat-inducing paint operations which result in expansion and bonding of the material from the intrusion device to either or both of the outer panel or the inner panel of the selected automotive closure panel, such as a door frame assembly having an inner door panel and an outer door panel, where it cures and remains in place. It is contemplated that the material expands from the external surface of the intrusion device and cross-links to the substrates, which can comprise either of both of a door inner panel and the door outer panel, thereby serving to reduce the noise and vibration emanating from the door assembly. Although the preferred embodiment discloses the material essentially chemically cross-linking from the external surface of an intrusion device, such as a door intrusion beam, into contact with the door outer panel, it will be appreciated that various patterns and applications of the material along the intrusion device would allow the material to expand and to adhere to either or both of the door inner panel and door outer panel as well as any other substrate that may be utilized or encountered in a door assembly or other application which would facilitate either passenger of cargo access to a vehicle.

In one embodiment the vibration reducing medium is extruded-in-place onto an intrusion device in a continuous or non-continuous extrusion adjacent to one or more inner walls defining a cavity within an automotive door assembly. The vibration reducing medium is activated to accomplish transformation (e.g. expansion or flow) of the active material within the cavity after the door assembly is mounted onto the vehicle and the vehicle is exposed to heat as it is processed through the e-coat and paint operation cycles of a final automotive assembly plant, which is well known in the art. The resulting structure includes a wall or expansive extrusion that is coated over at least a portion of its surface with the vibration reducing material acting to reduce vibration during transport and during functional operation of the door assembly.

Fig. 4 illustrates an example of an automotive door frame assembly typically encountered in the manufacture of automotive vehicles which includes a door intrusion device. It is common for such structures to include a plurality of hollow-portioned panel members that are joined and shaped to define the door inner panel, within which there are cavities. Examples of a suitable door frame assembly may include cargo doors, lift gates, hatchbacks, sliding doors, easy access third doors, door handles, locks, window assemblies or other vehicle doors and door components, sub-frame construction, or the like. One such structure in Fig. 4, for purposes of illustration (without limitation) includes a door intrusion device which may be in the form of a door intrusion beam. Although the present invention may be used in other portions of a door frame assembly that do not require the presence of a door intrusion device as well as other automotive closure panel assemblies other than doors, the intrusion device is typically comprised of metal (e.g., steel, aluminum, magnesium based, or the like) and may be cold stamped, hot stamped, roll-formed, a tubular beam, a hollow tubular beam, or a hydroformed section. It is also contemplated that the intrusion device could be formed of composite or other high strength polymeric materials depending upon the structural reinforcement required for specific applications of the present invention.

Vibration reduction of the assembly and door intrusion device may be accomplished according to the present invention by extrusion of an appropriate pattern of a vibration reduction material of the present invention disposed along either or both of the intrusion device or other selected portion of the door frame assembly such as the belt-line reinforcement member which is formed between the assembly and a corresponding window structure or other portion of the assembly suitable for application of the thermally expandable material.

The result of this process, after expanding the thermally expandable material, is a vehicle comprising a closure panel assembly with the system for the absorption of vibration as described above, wherein said thermally expandable material is in the expanded state. Such a vehicle is within the scope of the present invention.

In still another embodiment, the present invention comprises a cavity filler insert useful for acoustic insulation and damping vibrations in a hollow structure, said cavity filler insert comprising a thermally expandable material and at least one attachment member capable of holding said cavity filler insert in a predetermined position within said hollow structure, wherein a) said thermally expandable material extends at least around substantially the entire periphery of said cavity filler insert and b) the thermally expandable material according to this invention is used. Possible shapes and functions of cavity filler inserts have been described in the introductory part. The cavity filler insert may be substantially planar. "Substantially planar" in the context of the present invention means that the cavity filler insert is relatively flat and thin and has a maximum thickness that is significantly less than the maximum width of the insert. For example, the maximum thickness of the insert is typically less than 20% of the insert's maximum width. Typically, the thickness of the thermally expandable material that is present at the periphery of the cavity filler insert is from about 4 to about 10 mm. In this context, "thickness" means the dimension of the cavity filler insert that is perpendicular to the plane of the insert and parallel to the longitudinal axis of the hollow structural member in which the insert is to be positioned. This makes a geometrical difference to the "dissipative wave barrier" described above.

The expandable material will expand at least radially during activation in order to seal against the internal surfaces of the structural member to which the cavity filler insert is attached, and thus prevent undesirable noises and vibrations produced by the vehicle from being transmitted to the passenger compartment. The expandable material may be formulated such that it comes into contact with, but does not adhere or bond to, the interior walls of the cavity when activated and expanded. Alternatively and preferably, the expandable material components may be selected such that in its expanded state the expandable material does securely adhere or bond to the interior cavity wall surfaces (i.e., cannot be separated from the wall surfaces without application of significant force). In highly preferred embodiments of the invention, the expanded material is adhered sufficiently strongly to the cavity wall surfaces such that cohesive failure is observed (i.e., structural failure of the adhesive occurs such that adhesive remains on the surface of both the carrier and the cavity wall when the two items are separated). Preferably, the expanded material is a closed cell foam. It is also preferred that the expanded material be relatively low in density (e.g., less than 1200 kg/m³) so that the resulting dampened hollow structural member remains relatively low in weight, thereby providing vehicles with improved fuel economy.

This embodiment of the present invention also relates to an alternative method (compared to the use of the "dissipative wave barrier" described above) for reducing the transfer of vibrations from a vibration generator to a location to which the vibration generator is connected via a structural element, comprising equipping said structural element with means for dissipating vibrational energy generated by the vibration generator, characterized in that the means for dissipating vibrational energy comprises an activated cavity filler insert according to the present invention as described here above. Examples of vibration generators include motors, engines, pumps, gear boxes, suspension dampers and springs.

The method according to this embodiment of the present invention is particularly adapted for reducing structure-borne noise in an automobile vehicle. In this case the vibration generator is connected to at least one of the constitutive parts of the passenger compartment of said vehicle via a structural element. The shape of the structural member typically is that of a tubular rail with a polygonal (e.g., square or rectangular) cross-section, although the cross-section may also be irregular in shape.

A method according to the present invention may comprise the follow successive steps:
- selecting a cavity filler insert according to the present invention having dimensions such that it can be inserted into the cavity of the structural member,
- inserting the cavity filler insert into the cavity, preferably in a location close to the vibration generator, using the attachment member to fix the insert in the desired position (usually, such that the plane of the insert is substantially perpendicular to the longitudinal direction of the cavity); and
- expanding the thermally expandable material.

The cavity filler insert is preferably inserted into the cavity of the structural member between the vibration generator and the receiving vibrating structure from which the sound is generated.

If the desired location within the structural member cavity is difficult to access, the cavity filler insert may alternatively be affixed to one part of the structural member before the structural member is completely assembled to form the cavity. For example, a hollow structural member such as a rail or pillar is often manufactured from two or more separate formed metal pieces that are then welded or otherwise attached together. In such cases, it may be more convenient to attach the cavity filler insert to one of these pieces using the attachment member(s) prior to fabrication of the hollow structural member incorporating such formed metal piece.

Expansion of the thermally expandable material is achieved by a heating step, wherein the thermally expandable material is heated for a time and at a temperature effective to activate the blowing agent and also any curing agent that may be present.

Depending on the nature of the thermally expandable material and the line conditions at the assembly line, the heating step is typically carried out at a temperature from 130°C to 240°C, preferably from 150°C to 200°C, with a residence time in the oven from about 10 min. to about 30 min.

It is advantageous to take benefit of the heating step that follows the passage of the vehicle parts in the generally used electro coating bath (E-coat bath) to cause expansion of the thermoexpandable material as the temperature during this heating step is generally sufficient to cause the expected expansion.

The amount of thermally expandable material that is present in the cavity filler insert is selected such that, after expansion, its volume occupies the clearance between the insert and the inner surface of the structural element and it is effective in suppressing both air-borne and structure-borne noise transmission within the hollow structural member to the desired degree.

In one embodiment of the invention, the substantially planar cavity filler insert is formed entirely from the thermally expandable material. For example, the thermally expandable material may be moulded (e.g., by injection moulding using a mould having the desired shape of the finished cavity filler insert) or otherwise shaped (e.g., by forming a flat sheet of the thermally expandable material and then cutting that sheet by die stamping or other suitable means) to provide the insert. In such embodiments, the attachment member(s) are an integral part of the insert (i.e., are comprised of the thermally expandable material) and may take the form of legs or the like that help to hold the insert in position within the structural member cavity by friction or pressure (e.g., where the legs are sufficiently resilient to permit them to be displaced slightly while inserting the insert and then spring back into position against the cavity walls upon release). Alternatively, the attachment member(s) may be in the form of engaging projections or the like that are capable of being inserted through openings in the cavity walls but are designed to resist being withdrawn through such openings (for example, by engagement of hooks or ridges on the projections with the exterior surface of the structural member wall in the vicinity of the opening), thereby securing the cavity filler insert in place. In one advantageous embodiment, the attachment members are comprised of thermally expandable material so that upon activation by heating the attachment member expands and helps to fill and seal off the opening in the cavity wall into which it has been inserted.

In another embodiment of the invention, the main body of the cavity filler insert is fabricated from the thermally expandable material but the attachment member(s) are comprised of a different material such as metal or non-expandable heat-resistant plastic or rubber. For example, the attachment member may include a pin that extends into the edge of the thermally expandable material body as well as a plastic compressible plug or the like that can be inserted through a cavity wall opening but that resists being withdrawn from the opening.

In preferred embodiments of the invention, however, the cavity filler insert comprises a carrier upon which the thermally expandable material is mounted, as such a design helps to make the most effective and efficient use of the thermally expandable material. For example, the amount of thermally expandable material needed to seal and dampen the hollow structural member may be minimized. Additionally, as will be described in more detail subsequently, the carrier may be configured so as to direct the expanding foam produced from the expandable material towards the cavity walls and to prevent the expanding foam from sagging or distorting in a manner that interferes with complete sealing of the cavity.

Preferred embodiments of the present invention will now be explained with reference to the drawings. It will be apparent to those skilled in the art from this disclosure that the following description of this embodiment of the present invention is provided for illustration only, and not for the purpose of limiting the invention as defined by the appended claims and their equivalents.

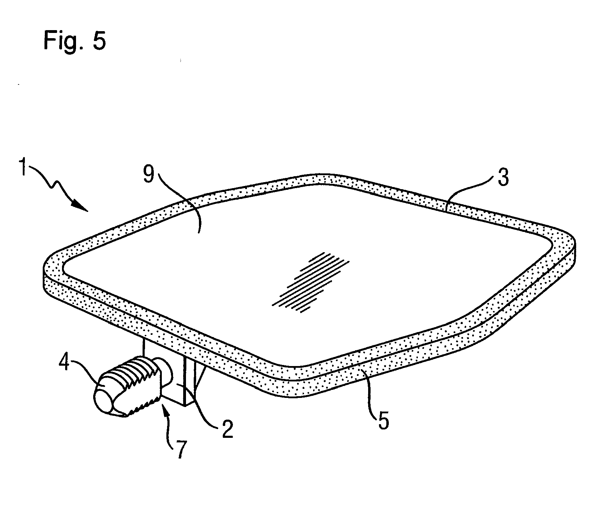

Referring initially to Fig. 5, a cavity filler insert **1** includes a carrier **3,** an expandable material **5** supported on the carrier **3,** and an attachment member 7 (comprised, in this particular embodiment, of a flange **2** and a fastener **4**) which may be integrally moulded with the carrier **3.** The carrier **3** includes a substantially flat and relatively rigid support plate **9** that in this embodiment is not covered by the expandable material **5**. The carrier may include a structure (such as a groove or channel, not shown in Fig. 5) that substantially surrounds the perimeter of the support plate **9,** that is integrally moulded therewith and that is configured to receive the expandable material **5** prior to thermal expansion.

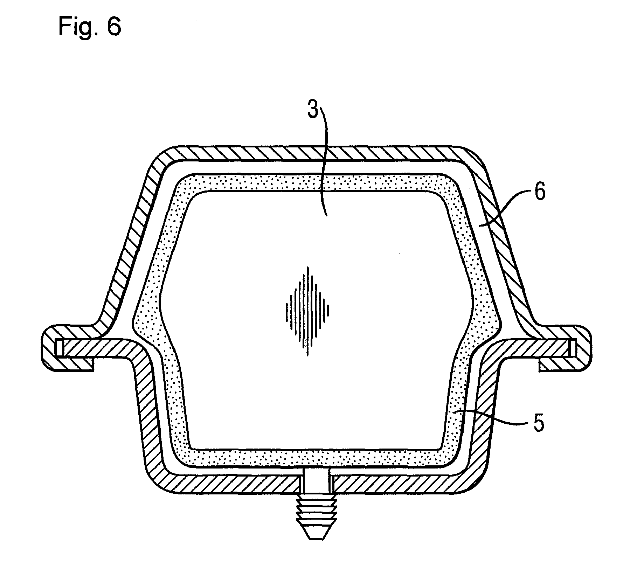

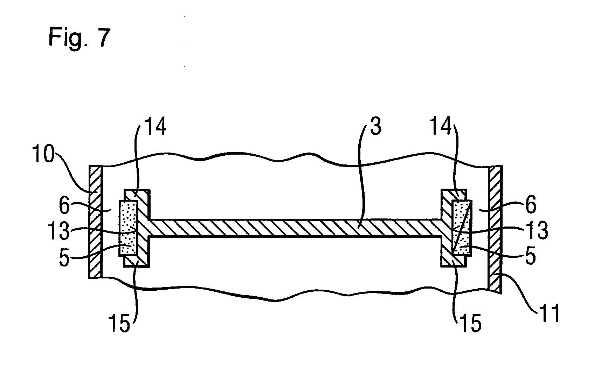

The overall shape of the cavity filler insert **1** is not particularly limited, but is typically configured so as to be similar in shape to, but somewhat smaller than, the vertical cross-section of the structural member cavity in which it is to be placed, as shown in Fig.6. Generally, it will be desirable for the outer edge of the cavity filler insert to substantially parallel the inner wall of the cavity so as to create a gap **6** that is substantially uniform in width between the insert and the cavity wall (typically, this gap will be from about 1 to about 10 mm). This gap permits a liquid coating material such as a metal pretreament solution (e.g., a phosphate bath), primer, or paint to substantially coat the entire interior surface of the hollow structural member before the expandable material is activated (i.e., foamed). Furthermore, the structure on the carrier **3** that receives the thermally expandable material **5** is not particularly limited and may, for example, be in the form of an "L" shaped shelf or flange, a "V", "U", or "C" shaped groove or channel, brackets, tabs, clips or the like. Figure 7 illustrates one embodiment of the invention wherein the expandable material **5** is positioned in a channel around the periphery of the carrier **3** and the cavity filler insert is fixed within a hollow structural member so as to create a gap between the expandable material **5** and the cavity walls **10** and **11.** The channel includes a mounting surface **13** that is substantially perpendicular to the plane of the carrier **3** as well as side walls **14** and **15** that are substantially parallel to the plane of the carrier **3.** The thermally expandable material may also be secured to the carrier by means of holes around the perimeter of the carrier, wherein the expandable material extends into or through such holes, or by means of a rim around the perimeter of the carrier and generally perpendicular to the plane of the carrier, wherein the expandable material surrounds such rim. The carrier may contain multiple types of structures that secure the thermally expandable material to the carrier. It will generally be preferred to employ a supporting structure that helps to direct the expandable material as it is expanding towards the interior surface of the cavity that is being sealed, such as the side walls **14** and **15** illustrated in Figure 7. The thermally expandable material may be disposed as discrete and separate portions around the periphery of the carrier or may be in the form of a circumscribing and continuous band. The outer edge of the band of thermally expandable material may be slightly recessed from the outer edge of the carrier, or may be substantially flush with the outer edge of the support plate, or may extend out beyond the outer edge of the carrier (as is shown in Figures 5, 6 and 7).

Although the carrier in one embodiment of the present invention is in the form of a single plate, in other also suitable embodiments the carrier comprises a plurality of plates that are assembled such that at least a portion of the thermally expandable material is positioned between two of the plates. The plates thus may be substantially parallel to each other with a layer of thermally expandable material sandwiched in between the plates. The outer edge of the thermally expandable material layer may be slightly recessed from the outer edges of the plates, or may be substantially flush with the outer edges of the plates, or may extend out beyond the outer edges of the plates. In one embodiment, the thermally expandable material layer extends over essentially the entire surface of each of the plates. However, in another embodiment the thermally expandable material layer is present only around the outer edge of the cavity filler insert, with the interior of the cavity filler insert being free of thermally expandable material. In yet another embodiment, the cavity filler insert may comprise a first plate that is substantially flat and a second plate that has a raised substantially flat interior portion. The plates are fastened together such that the raised substantially flat interior portion of the second plate is brought into contact with the first plate to create a channel around the periphery of the two plates that is capable of receiving and supporting the thermally expandable material.

One or both of the plates may contain a plurality of openings into which and/or through which the expandable material may extend (either before and after activation and expansion or only after activation and expansion). The cavity filler insert may thus, for example, be in the form of a lattice. In preferred embodiments, any through holes which are initially present in the cavity filler insert are filled or closed after activation of the thermally expandable material.

Any of the devices known in the art to be capable of securing a carrier bearing an expandable material to the interior wall of a structural member cavity may also be utilized as an attachment member in the cavity filler inserts of the present invention and the selection of a particular design is not believed to be particularly critical. For example, the attachment member may include two or more resiliently deflectable barbs configured for secured receipt in an opening in the structural member. Each barb may comprise a shank bearing a retaining piece that protrudes at an angle to the shank so as to form a hook. Such an attachment member is inserted into the wall opening with application of minor force, causing the barbs reversibly bend together and towards each other. After the barbs have passed through the opening, they return to their normal position apart from each other. This allows the retaining pieces to engage with the outer surface of the structural member wall around the periphery of the opening, thereby preventing the attachment member from being readily withdrawn through the opening and securing the cavity filler insert within the cavity. Affixing the insert in this manner so as to prevent it from being easily displaced is highly desirable, since otherwise the handling that the structural member will normally encountered during assembly of the vehicle prior to heating and activating the expandable material is likely to cause the cavity filler insert to no longer be properly positioned in the desired location within the cavity. Other types of attachment members may also be used for this purpose, including for example a "Christmas tree"-type fastener (typically fabricated of a resilient plastic) having an elongated portion with multiple angled flanges. The cavity filler insert may have one attachment member or a plurality of attachment members, of the same type or different types.

Typically, the attachment member projects radially from the cavity insert filler and may be generally parallel to the plane of the cavity insert filler or in the plane of the cavity insert filler.

The carrier is preferably comprised of a mouldable material which is sufficiently resistant to cracking and breakage during normal usage, and has a melting or softening point that is higher than both the activation temperature of the expandable material 5 and the bake temperature that the structural members containing the cavity filler insert will be exposed to. Preferably, the mouldable material is sufficiently resilient (non-brittle) and strong at ambient temperatures to withstand cracking or breaking while also being sufficiently heat resistant at elevated temperatures (e.g., the temperatures employed to foam the expandable material) to hold the expandable material in the desired position within the cavity of the structural member without significant warping, sagging or distortion. For example, the carrier may be formed of a mouldable material that is somewhat pliable and resistant to breaking so that the assembled cavity filler insert can be subjected to bending forces at room temperature without being cracked or permanently deformed. The material that comprises the carrier is not particularly limited, and for example, may be any number of polymeric compositions that possess these qualities (e.g., polyesters, aromatic polyether, polyether ketones, and especially polyamides such as nylon 66). Polymeric compositions that are suitable for use as the carrier would be well known to those of ordinary skill in the art and include both thermoplastic and thermoset materials, and thus will not be described in detail herein. Unfoamed (solid) as well as foamed polymeric compositions may be utilized to fabricate the carrier. The mouldable materials can, in addition to the polymeric compositions, also comprise various additives and fillers, such as colorants and/or reinforcing fibers (e.g. glass fibers), depending on the desired physical characteristics. Preferably, the mouldable material has a melting or softening point (ASTM D789) of at least 200 degrees C, more preferably at least 225 degrees C, or most preferably at least 250 degrees C and/or has a heat deflection temperature at 18.6 kg (ASTM D648) of at least 180 degrees C, more preferably at least 200 degrees C, or most preferably at least 220 degrees C and/or a tensile strength (ASTM D638; 50% R.H.) of at least 1000 kg/cm², more preferably at least 1200 kg/cm², most preferably at least 1400 kg/cm² and/or a flexural modulus (ASTM D790; 50% R.H.) of at least 50,000 kg/cm², more preferably at least 60,000 kg/cm², most preferably at least 70,000 kg/cm². Alternatively, the carrier or one or more portions of the carrier may be fabricated from a metal such as steel or aluminum.

The expandable material may be assembled with the carrier by any of the known methods for manufacturing cavity filler inserts, including co-injection moulding, side-by-side injection moulding, over moulding and insert moulding.

When the cavity filler insert is to be attached to a wall of a structural member, a portion of the attachment member may be inserted into an opening of the wall that is sized to substantially match the attachment member portion that is being inserted. The shape of the opening is not particularly critical and may, for example, be square, circular, rectangular, polygonal, oval, or irregular, provided it is capable of receiving the attachment member and interacting with the attachment member so as to hold the cavity filler insert in the desired position.

In preferred embodiments of the invention, a portion of expandable material is positioned near the opening in the structural member wall so that upon activation of the expandable material the expandable material expands to completely block the opening. For example, the attachment member may extend out from the cavity filler insert through a portion of the thermally expandable material. Upon activation, the expanded material may extend through the opening and at least partially encase the attachment member, thereby helping to provide a secure, permanent fixing of the cavity filler insert within the cavity.

Other carrier and attachment member designs known in the art can be readily adapted for use in the present invention.

The cavity filler insert can be used in products having hollow structural members other than vehicles, including, without limitation, aircraft, domestic appliances, furniture, buildings, walls and partitions, and marine applications (boats).

Still another embodiment of the present invention comprises a constrained layer damping structure comprising a panel to be damped, a constraining layer and a layer of vibration damping material sandwiched between said panel and that constraining layer, wherein the layer of vibration damping material consists of the thermally expandable material according to the present invention.

In addition, the present invention comprises a constrained layer damping structure comprising a panel to be damped, a constraining layer and a layer of foamed vibration damping material sandwiched between said panel and that constraining layer, wherein the layer of foamed vibration damping material consists of the thermally expandable material according to the present invention after having been expanded by heating at a temperature in the range of 130 to 240 °C.

The constrained layer damping structure may correspond to the analogous constrained layer damping structure described in US 6110985, as quoted in the introductory section.

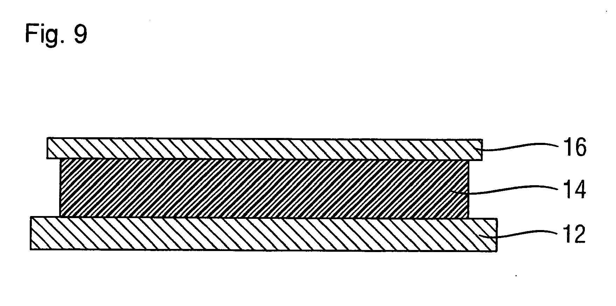

With reference to Fig. 9 there is shown schematically a constrained layer damping structure having a panel 12 to be damped, such as a metal automobile body panel, a layer 14 of thermally expandable material according to the present invention after having been expanded, and a constraining layer 16. The panel 12 to be damped is preferably a steel sheet (preferably cold rolled) about 0.6-0.8 mm thick, less preferably thicker or thinner, less preferably aluminum or composite sheets. The constraining layer 16 is usually thinner than panel 12; layer 16 is preferably sheet steel about 0.5, less preferably 0.3-0.8, mm thick. Optionally in some applications layer 16 may be 0.15-0.3 mm thick. Layer 16 may less preferably be aluminum or composite. Layer 14 of thermally expandable material, prior to expansion, is preferably 0.5-2.5, more preferably 0.5-2, more preferably 0.75-1.5, more preferably 0.85-1.2, more preferably about 1, mm thick. Layer 14, after expansion, is a foam 1-4, more preferably 1-3, more preferably 1.2-2, more preferably about 1. 5, mm thick. As can be seen, this expanded thickness of damping foam is equal to the standoff distance or separation distance or gap between panel 12 and layer 16. Layer 14 during expansion preferably expands 50-200% to fill the gap.

To make a constrained layer damping structure such as shown in Fig. 9, a sheet of expandable vibration damping material according to this invention is die cut to the desired shape and bonded or attached to a substrate or panel to be damped, such as an automobile body panel, or to a constraining sheet or layer, by methods known in the art, such as heat staking or mechanical fasteners. Less preferably adhesive may be used if necessary. The second outer sheet is then attached to the first outer sheet with the thermally expandable material there between to form a sandwich structure of the three layers; however the two outer sheets are preferably attached with a standoff or offset as known in the art (such as by using embossments to separate the sheets) so that the inner thermally expandable material layer occupies about 2/3 of the distance between the two outer sheets, to allow for subsequent expansion. The constrained layer damping structure is then heated to expand and foam the thermally expandable material. When the panel to be damped is an automobile panel, the vehicle passes through the e-coat process and the bake oven. During the e-coat bake cycle the blowing agent is activated and the thermally expandable material expands, filling the space or gap between the two outer layers to provide the structure shown in Fig. 9.

In automotive applications such as the face of the wheel well away from the wheel, the dashboard, the floor boards, the roof, the firewall and other applications, the area to be damped is analyzed for both vibrational and transmission properties. To minimize weight and cost, the area to be covered by a constrained layer damping structure or damping system is optimized to the minimum area required to achieve the desired sound and vibration reduction. For example, in the automotive wheel well a metal constraining layer of the pre-selected dimensions is stamped to conform to the wheel well surface and be offset therefrom a fixed distance corresponding to the final thickness of the foamed thermally expandable material layer.

In the broadest sense, the present invention generally comprises a vehicle containing in or on at least one of its structural components a thermally expandable material according to the present invention, wherein the thermally expandable material has been expanded by heating at a temperature in the range of 130 to 240 °C. In the preceding description, various parts of a vehicle have been mentioned which may be in contact with the thermally expanded material of this invention. In one of the embodiments described in the preceding sections, the expanded material fills the gap between a vehicle door panel and an intrusion device reinforcing the door. This arrangement efficiently reduces vibrations of the door panel.

However, in addition to this arrangement, or instead of it, vibrations of an automotive door assembly or other panel assembly of a vehicle can also be damped without involving an intrusion device. An example of other damping arrangements is the constrained layer damping structure which has also been mentioned in the preceding description. Generally speaking, the damping properties are improved if the expanded thermally expandable material is constrained either between two surfaces of structural or functional elements of the vehicle, or between a surface of a structural or functional element of the vehicle and a constraining layer. The dampening effect is especially pronounced if the stiffness of the expanded thermally expandable material is lower than the stiffness of the structural or functional element of the vehicle and of the constraining layer.

But the thermally expanded material of this invention is also effective in damping vibrations of panels without being constrained between the panel and a constraining structure like a carrier, a plate, or an intrusion bar. The material according to this invention may be fixed directly onto the surface of the panel to be damped, e.g. in form of patches or stripes.

An optimized working example of a (not yet expanded) thermally expandable material according to this invention is now described:
12 parts by weight SIS block copolymer a), styrene content 20%, glass transition temperature - 13°C (Hybrar® 5127, available from Kuraray)
28 parts by weight SIS block copolymer b), styrene content 20%, glass transition temperature +8°C (Hybrar® 5125, available from Kuraray)
15 parts by weight thermoplastic ethylene/vinyl acetate copolymer (vinyl acetate content 28 mole-%)
20.5 parts by weight fillers (mixture of calcium carbonate and barium sulfate) 5 parts by weight aliphatic hydrocarbon resin tackifier (Escorez® 1102, ExxonMobil) 5 parts by weight diisononylphtalate
5.8 parts by weight blowing agent (azodicarbonamide)
3 parts by weight zinc oxide.
1.1 parts by weight phenolic anti-oxidant
1.2 part by weight curing agents (sulfur + tetramethylthiuram disulfide)
0.7 part by weight accelerator agents (mercaptobenzothiazole and N,N'-dicyclohexyl-2-benzothiazolsulfenamide)
2.7 parts by weight urea (treated surface)

The combination of two non hydrogenated tri-block copolymers (SIS) with a specific ratio gives optimum vibration properties whatever the curing temperature. This means that the foam has same performance between 140°C and 200°C (foam curing temperature), which are the automotive online curing conditions. The two SIS copolymers have different glass transition temperatures; about -13°C and about +8°C, respectively. These temperatures are important because they allow to the foam to be efficient (after curing cycle) between 0°C to 30°C. The foam according to the present invention has same performance whatever the curing temperature is within the specified range. This is due to the presence of the crosslinking system and the foaming agent, which are activated and accelerated already at the lower curing temperature.

All these components make a closed-cell foam after expansion. The expansion rate for this formulation is about 150 % by volume. It may be adjusted by varying the amount of blowing agent to lie between 200 and 300%, approximately. If the curing agents (sulfur + tetramethylthiuram disulfide) are replaced by curing agents based on organic peroxides, a lower expansion rate is obtained, and the material becomes damaged at curing temperatures above about 200 °C.

The material according to the present invention is prepared in a Z-blend mixer according to the following sequence:
1. Mixer temperature: 180 °C; introduce both SIS materials in one step. The materials melt (temperature lower than temperature of mixer). Wait to have a homogenous product.
2. Mixer temperature 160 °C; Introduce ethylene/vinyl acetate copolymer in 3 steps. Wait to have a homogenous white paste.
3. Mixer temperature 150 °C; Introduce fillers in 3 steps. Wait to have a homogenous paste.
4. Mixer temperature 150 °C; Introduce tackifying resin in one step.
5. Mixer temperature 130 °C; introduce diisononylphtalate in minimum 4 steps to avoid "de-mixing", wait to have an homogenous product.
6. Mixer temperature 80 °C; Introduce ZnO and antioxidant.
7. Mixer temperature 70 °C: The material has to be below 80 °C to avoid the activation of the different reactive products. Introduction of reactive products (curing agent, accelerator agent, blowing agent, urea) one by one and mixing until a homogenous product is obtained.

If desired, a color pigment (carbon black) may be added at the end of step 7.

The water absorption of the material according to the working example in the expanded state is less than 10 % by weight of the expanded material (22 hours in water at room temperature). The lap shear strength on steel coupons is 0.6 MPa when cured at 195 °C.

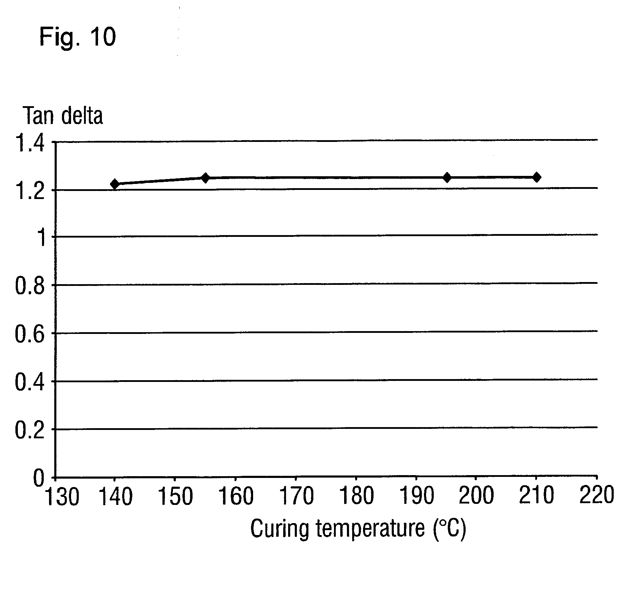

Fig. 10 shows the values of tan δ (at room temperature = 20 °C) for materials cured at different temperatures. It is evident that tan δ is always above 1.0, and practically independent from the curing temperature.

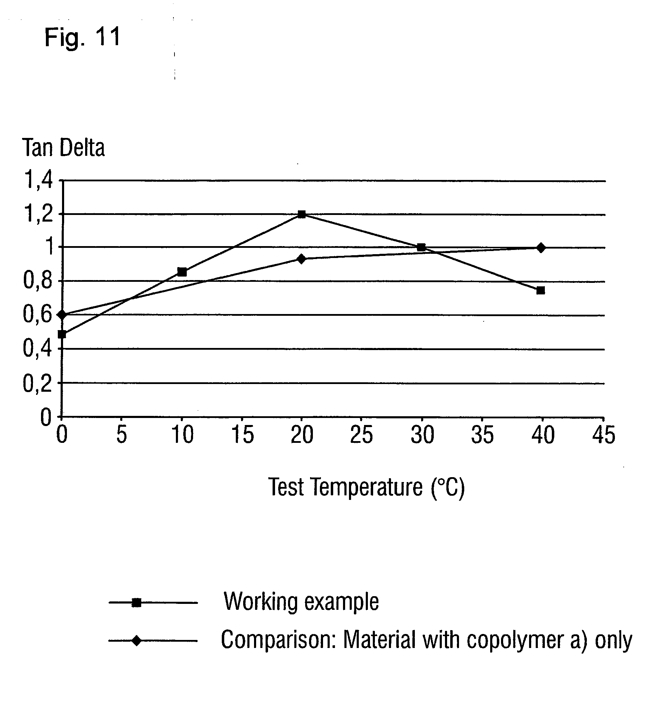

Fig. 11 shows a comparison of tan δ as a function of the test temperature for a material according to the working example with a comparative material in which the SIS copolymer b) is replaced by SIS copolymer a). The material according to the invention has significantly higher values of tan δ in the most relevant temperature range from 10 to 30 °C.

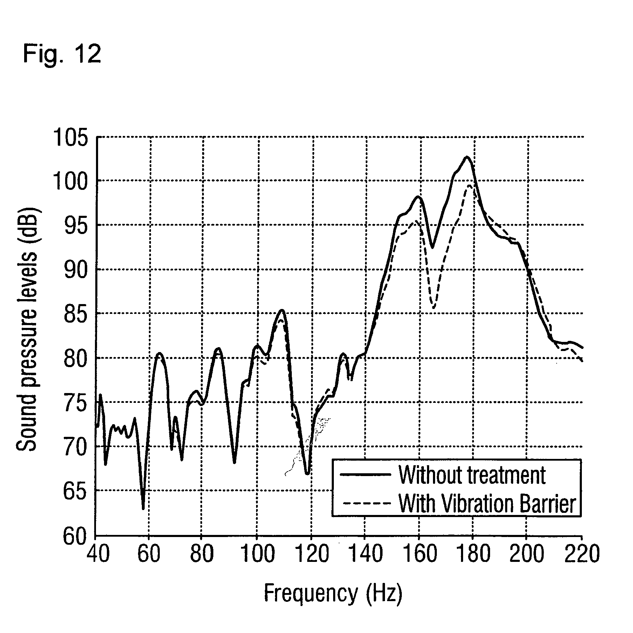

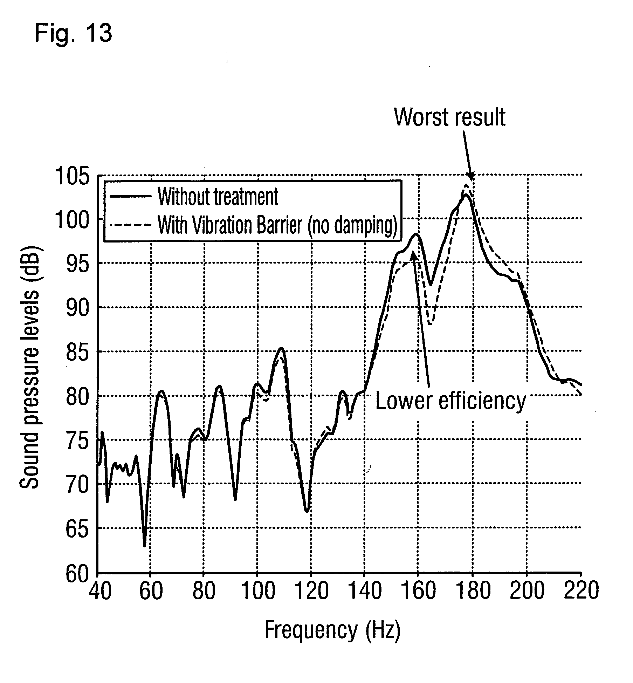

Application of the material according to the working example for a dissipative wave barrier as described in WO2007/039308: The example of Fig. 12 shows the effect of the damping value on the noise level inside a vehicle when a dissipative wave barrier according to the present invention, carrying the expanded foam according to the working example, is placed onto the vibratory transmission path. This figure compares the untreated vehicle and the same vehicle with the foamed material having the real and effective Young's modulus and damping loss factor (lower values are better). For comparison with Fig. 12, Fig. 13 shows the insufficient damping behavior when a wave barrier carrying a foam according to the state of the art and outside the scope of the present invention is used. This figure shows clearly that if the damping loss factor is decreased, the solution becomes less efficient and in the most critical frequency range is worse than the untreated vehicle.

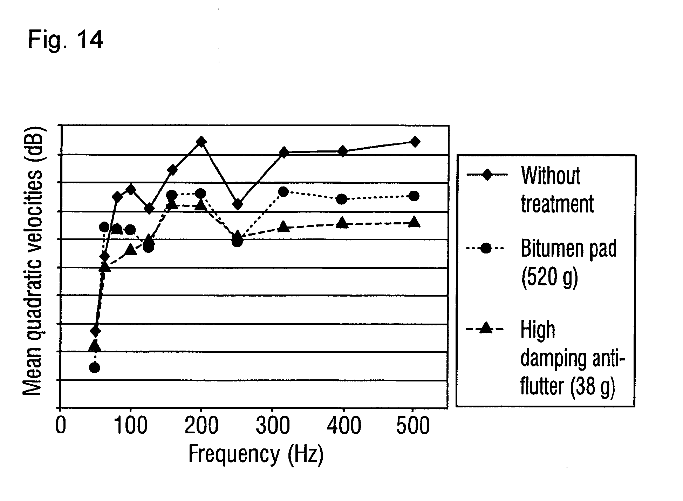

Fig. 14 shows a comparison of the vibration behavior of a car door without any treatment, with classical bitumen pads, and with the intrusion device carrying the expanded thermally expandable material of this invention (called "high damping antiflutter" in the figure). The arrangement of the intrusion device in the car door is shown in Fig. 4.

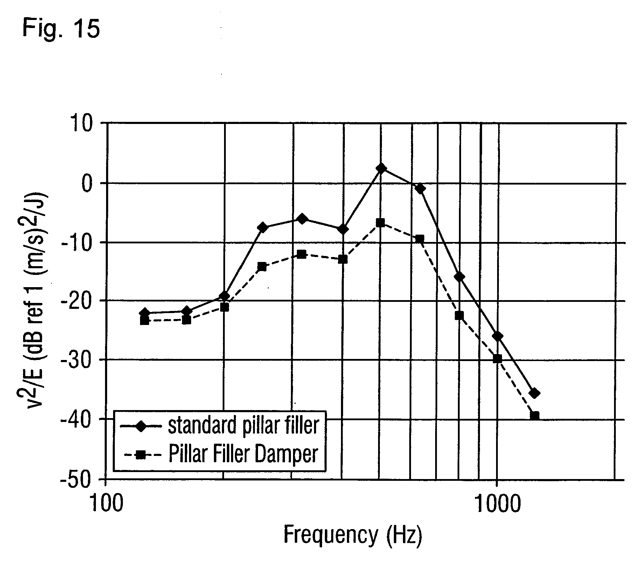

Fig. 15: shows a comparison of the acoustic behavior (lower values are better) as a function of frequency of a pillar filler carrying a foam according to the state of the art ("standard pillar filler") with a corresponding pillar filler carrying the expanded thermally expandable material according to the working example ("pillar filler damper"). The pillar filler according to the present invention does not only reduce airborne noise like conventional pillar fillers according to the state of the art, but it also reduces the regeneration noise effect due to structure borne noise, as this pillar filler in addition has partly the function of a "dissipative vibratory wave barrier", as outlined in previous section of this specification.

### Short description of the figures:

Fig. 1: Upper drawing: a section of the hollow frame of a car without the vibration barrier. Vibrations which are injected into the hollow frame from a source are guided along the walls of the frame without significant damping. Lower drawing: effect of the dissipative vibratory wave barrier introduced into the transmission path (in the expanded state):
Fig. 2: A schematic perspective view of a dissipative vibratory wave barrier 3 after insertion into a structural element 4.
Fig. 3: A schematic perspective view of the dissipative vibratory wave barrier of figure 2 after expansion of the thermally expandable material.
Fig. 4: Top: Drawing of a car door equipped with a reinforcement rod (intrusion device); Bottom: Example of a reinforcement rod (intrusion device) covered with two stripes of thermally expandable material.
Fig. 5: A cavity filler insert **1** including a carrier **3,** an expandable material **5** supported on the carrier **3,** and an attachment member 7.
Fig. 6: A cross section of an automotive pillar with a cavity filler insert fixed therein, leaving in the uncured state a gap 6 between the unexpanded heat expandable material 5 and the inner surfaces of the pillar.
Fig. 7: A cavity filler insert wherein the expandable material **5** is positioned in a channel around the periphery of the carrier **3** and the cavity filler insert is fixed within a hollow structural member so as to create a gap between the expandable material **5** and the cavity walls **10** and **11.**

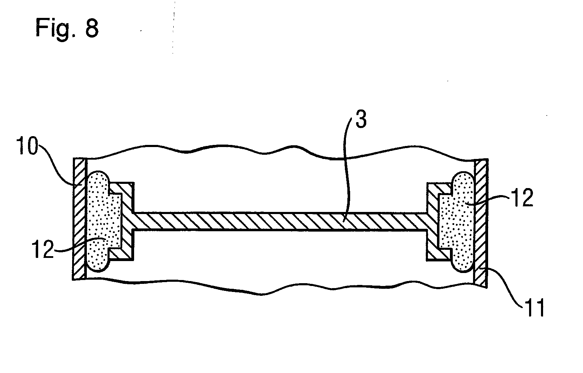

Fig. 8: The cavity filler insert of Figure 7 after thermal activation of the expandable material 12.
Fig. 9: A constrained layer damping structure having a panel 12 to be damped, such as a metal automobile body panel, a layer 14 of thermally expandable material according to the present invention after having been expanded, and a constraining layer 16.
Fig. 10: Values of tan δ (at room temperature = 20 °C) for materials cured at different temperatures.
Fig. 11: Evolution of tan delta with test temperature at 100 Hz for a material according to the working example with a comparative material in which the SIS copolymer b) is replaced by SIS copolymer a).
Fig. 12: Effect of the damping value on the noise level inside a vehicle when a dissipative wave barrier according to the present invention, carrying the expanded foam according to the working example, is placed onto the vibratory transmission path.
Fig. 13 (comparison): Damping behavior of a wave barrier carrying a foam according to the state of the art and outside the scope of the present. This figure shows clearly that if the damping loss factor is decreased, the solution becomes less efficient and in the most critical frequency range is worse than the untreated vehicle.
Fig. 14: Comparison of the vibration behavior of a car door without any treatment, with classical bitumen pads, and with the intrusion device carrying the expanded thermally expandable material of this invention (called "high damping antiflutter" in the figure). The arrangement of the intrusion device in the car door is shown in Fig. 7.
Fig. 15: Comparison of the acoustic behavior (lower values are better) as a function of frequency of a pillar filler carrying a foam according to the state of the art ("standard pillar filler") with a corresponding pillar filler carrying the expanded thermally expandable material according to the working example ("pillar filler damper") .

## Claims

1. A thermally expandable material comprising:
a) from 3 to 40 % by weight of a first thermoplastic elastomer having a first glass transition temperature,
b) from 3 to 40 % by weight of a second thermoplastic elastomer having a second glass transition temperature,
wherein the first and the second glass transition temperature differ by at least 10 °C,
c) from 5 to 50 % by weight of at least one thermoplastic polymer selected from the group consisting of polymers and copolymers with at least one polymerizable C = C double bond,
d) from 0 to 30% by weight of at least one tackifying resin,
e) at least one latent chemical blowing agent in an amount effective to cause the expandable material to expand at least 50 % in volume when heated at a temperature of 150 °C for at least 20 minutes,
wherein the sum of components a) to e) is less than 100 % by weight, and the remainder to 100 % by weight is made up of further components or adjuvants.

2. A thermally expandable material according to claim 1, wherein the first thermoplastic elastomer a) and/or the second thermoplastic elastomer b) is selected from the group consisting of thermoplastic polyurethanes, styrene/butadiene block copolymers, hydrogenated styrene/butadiene block copolymers, styrene/isoprene block copolymers, and hydrogenated styrene/isoprene block copolymers.

3. A thermally expandable material according to one or more of claims 1 and 2, wherein the first thermoplastic elastomer a) has a glass transition temperature in the range from - 25 to 0.0 °C, preferably in the range from -20 to - 5 °C.

4. A thermally expandable material according to one or more of claims 1 to 3, wherein the second thermoplastic elastomer b) has a glass transition temperature in the range from 0.1 to 30 °C, preferably in the range from 4 to 20 °C.

5. A thermally expandable material according to one or more of claims 1 to 4, wherein at least one of the following conditions is met for the relative amounts of the components:
component a) is present in an amount of from 5 to 20 % by weight, preferably of from 8 to 16 % by weight;
component b) is present in an amount of from 15 to 40 % by weight, preferably of from 20 to 35 % by weight;
component c) is present in an amount of from 10 to 25 % by weight, preferably of from 12 to 20 % by weight;
component d) is present in an amount of from 2 to 10 % by weight, preferably of from 3 to 8 % by weight;
component e) is present in an amount of from 1 to 20 % by weight, preferably of from 2 to 10 % by weight;
a chemical curing agent f) is present in an amount of from 0.2 to 5 % by weight,
preferably of from 0.7 to 2 % by weight,
wherein the sum of components a) to f) is less than 100 % by weight, and the remainder to 100 % by weight is made up of further components or adjuvants.

6. A thermally expandable material according to one or more of claims 1 to 5 comprising:
a) from 5 to 20 % by weight of a first thermoplastic elastomer selected from the group consisting of thermoplastic polyurethanes, styrene/butadiene block copolymers, hydrogenated styrene/butadiene block copolymers, styrene/isoprene block copolymers, and hydrogenated styrene/isoprene block copolymers, which has a glass transition temperature in the range from -25 to 0.0 °C,
b) from 15 to 40 % by weight of a second thermoplastic elastomer selected from the group consisting of thermoplastic polyurethanes, styrene/butadiene block copolymers, hydrogenated styrene/butadiene block copolymers, styrene/isoprene block copolymers, and hydrogenated styrene/isoprene block copolymers, which has a glass transition temperature in the range from 0.1 to 30 °C,
c) from 10 to 25% by weight of at least one thermoplastic polymer selected from the group consisting of ethylene/vinyl acetate copolymers and ethylene/methyl acrylate copolymers,
d) from 2 to 10% by weight of at least one tackifying resin,
e) at least one latent chemical blowing agent in an amount effective to cause the expandable material to expand at least 50 % in volume when heated at a temperature of 150 °C for at least 20 minutes,
f) from 0.5 to 4% by weight of at least one curing agent based on sulfur and/or sulfur compounds,
wherein the sum of components a) to f) is less than 100 % by weight, and the remainder to 100 % by weight is made up of further components or adjuvants.

7. A thermally expandable material according to one or more of claims 1 to 6, wherein the further components or adjuvants comprise one or more of:
g) from 5 to 40 % by weight fillers,
h) from 2 to 20 % by weight plasticizer,
i) from 1 to 5 % by weight curing catalyst,
k) from 0.05 to 5 % by weight anti-oxidant and/or stabilizer,
l) from 0.05 to 5 % by weight accelerator agent,
m) from 1 to 10 % by weight urea.

8. A thermally expandable material according to any of claims 1 to 7, wherein the thermally expandable material when expanded by heating at a temperature in the range of 130 to 240 °C has a Young's storage modulus E' between 0.1 MPa and 1000 MPa and a loss factor higher than 0.5 in the frequency range 0 to 500 Hz at a temperature between -10 and +50 °C.

9. A dissipative vibratory wave barrier comprising a carrier having an inner surface and an outer surface, wherein a coating comprising a thermally expandable material according to one or more of claims 1 to 8 is present on at least one of said inner surface or said outer surface.

10. A method for reducing the transfer of vibrations from a vibration generator to a location to which the vibration generator is connected via a structural element, comprising equipping said structural element with a means for dissipating the vibrational energy generated by the vibration generator, wherein said means comprises a dissipative vibratory wave barrier according to claim 9.

11. A system for the damping of vibration in an automotive closure panel assembly, comprising:
a) an intrusion device associated with an automotive exterior panel structure, and
b) a thermally expandable material for damping vibration disposed over at least a portion of said intrusion device and in contact with said intrusion device prior to expansion of said expandable material, and with a surface of said exterior panel after expansion of said expandable material,
wherein said thermally expandable material corresponds to one or more of claims 1 to 8.

12. A cavity filler insert useful for acoustic insulation and damping vibrations in a hollow structure, said cavity filler insert comprising a thermally expandable material and at least one attachment member capable of holding said cavity filler insert in a predetermined position within said hollow structure, wherein a) said thermally expandable material extends at least around substantially the entire periphery of said cavity filler insert and b) said thermally expandable material corresponds to one or more of claims 1 to 8.

13. A method of damping air- and structure-borne vibration in a hollow structure, said method comprising a) placing within said hollow structure a cavity filler insert which comprises a thermally expandable material and at least one mounting device capable of holding said cavity filler insert in a predetermined position within said hollow structure and b) heating said thermally expandable material to a temperature effective to cause said thermally expandable material to expand and come into contact with the interior surface of said hollow structure, thereby sealing off said hollow structure, wherein the thermally expandable material according to one or more of claims 1 to 8 is used as said thermally expandable material

14. A constrained layer damping structure comprising a panel to be damped, a constraining layer and a layer of vibration damping material sandwiched between said panel and said constraining layer, wherein the layer of vibration damping material consists of the thermally expandable material according to one or more of claims 1 to 8.

15. A vehicle containing in or on at least one of its structural components a thermally expandable material according to one or more of claims 1 to 8, wherein the thermally expandable material has been expanded by heating at a temperature in the range of 130 to 240 °C.

## Patentansprüche

1. Thermisch ausdehnbares Material, das Folgendes umfasst:
a) von 3 bis 40 Gew.-% eines ersten thermoplastischen Elastomers mit einer ersten Glasübergangstemperatur,
b) von 3 bis 40 Gew.-% eines zweiten thermoplastischen Elastomers mit einer zweiten Glasübergangstemperatur,
wobei die erste und die zweite Glasübergangstemperatur sich um mindestens 10 °C unterscheiden,
c) von 5 bis 50 Gew.-% mindestens eines thermoplastischen Polymers, das aus der Gruppe bestehend aus Polymeren und Copolymeren mit mindestens einer polymerisierbaren C=C-Doppelbindung ausgewählt ist,
d) von 0 bis 30 Gew.-% mindestens eines klebrigmachenden Harzes,
e) mindestens ein latentes chemisches Treibmittel in einer Menge, die dazu wirksam ist, zu verursachen, dass sich das ausdehnbare Material um mindestens 50 % des Volumens ausdehnt, wenn es bei einer Temperatur von 150 °C für mindestens 20 Minuten erhitzt wird,
wobei die Summe der Bestandteile a) bis e) weniger als 100 Gew.-% ausmacht und der Rest zu 100 Gew.-% von weiteren Bestandteilen oder Hilfsstoffen gebildet wird.

2. Thermisch ausdehnbares Material nach Anspruch 1, wobei das erste thermoplastische Elastomer a) und/oder das zweite thermoplastische Elastomer b) aus der Gruppe bestehend aus thermoplastischen Polyurethanen, Styrol/Butadien-Blockcopolymeren, hydriertem Styrol/Butadien-Blockcopolymeren, Styrol/Isopren-Blockcopolymeren und hydriertem Styrol/Isopren-Blockcopolymeren ausgewählt ist bzw. sind.

3. Thermisch ausdehnbares Material nach einem oder mehreren der Ansprüche 1 und 2, wobei das erste thermoplastische Elastomer a) eine Glasübergangstemperatur im Bereich von -25 bis 0,0 °C, vorzugsweise im Bereich von -20 bis -5 °C aufweist.

4. Thermisch ausdehnbares Material nach einem oder mehreren der Ansprüche 1 bis 3, wobei das zweite thermoplastische Elastomer b) eine Glasübergangstemperatur im Bereich von 0,1 bis 30 °C, vorzugsweise im Bereich von 4 bis 20 °C aufweist.

5. Thermisch ausdehnbares Material nach einem oder mehreren der Ansprüche 1 bis 4, wobei mindestens eine der folgenden Bedingungen für die relativen Mengen der Bestandteile erfüllt wird:
Bestandteil a) liegt in einer Menge von 5 bis 20 Gew.-%, vorzugsweise von 8 bis 16 Gew.-% vor;
Bestandteil b) liegt in einer Menge von 15 bis 40 Gew.-%, vorzugsweise von 20 bis 35 Gew.-% vor;
Bestandteil c) liegt in einer Menge von 10 bis 25 Gew.-%, vorzugsweise von 12 bis 20 Gew.-% vor;
Bestandteil d) liegt in einer Menge von 2 bis 10 Gew.-%, vorzugsweise von 3 bis 8 Gew.-% vor;
Bestandteil e) liegt in einer Menge von 1 bis 20 Gew.-%, vorzugsweise von 2 bis 10 Gew.-% vor;
ein chemischer Härter f) liegt in einer Menge von 0,2 bis 5 Gew.-%, vorzugsweise von 0,7 bis 2 Gew.-% vor,
wobei die Summe der Bestandteile a) bis f) weniger als 100 Gew.-% ausmacht und
der Rest zu 100 Gew.-% von weiteren Bestandteilen oder Hilfsstoffen gebildet wird.

6. Thermisch ausdehnbares Material nach einem oder mehreren der Ansprüche 1 bis 5, das Folgendes umfasst:
a) von 5 bis 20 Gew.-% eines ersten thermoplastischen Elastomers, das aus der Gruppe bestehend aus thermoplastischen Polyurethanen, Styrol/Butadien-Blockcopolymeren, hydriertem Styrol/Butadien-Blockcopolymeren, Styrol/Isopren-Blockcopolymeren und hydriertem Styrol/Isopren-Blockcopolymeren ausgewählt ist und das eine Glasübergangstemperatur im Bereich von -25 bis 0,0 °C aufweist,
b) von 15 bis 40 Gew.-% eines zweiten thermoplastischen Elastomers, das aus der Gruppe bestehend aus thermoplastischen Polyurethanen, Styrol/Butadien-Blockcopolymeren, hydriertem Styrol/Butadien-Blockcopolymeren, Styrol/Isopren-Blockcopolymeren und hydriertem Styrol/Isopren-Blockcopolymeren ausgewählt ist und das eine Glasübergangstemperatur im Bereich von 0,1 bis 30 °C aufweist,
c) von 10 bis 25 Gew.-% mindestens eines thermoplastischen Polymers, das aus der Gruppe bestehend aus Ethylen/Vinylacetat-Copolymeren und Ethylen/Methylacrylat-Copolymeren ausgewählt ist,
d) von 2 bis 10 Gew.-% mindestens eines klebrigmachenden Harzes,
e) mindestens ein latentes chemisches Treibmittel in einer Menge, die dazu wirksam ist, zu verursachen, dass sich das ausdehnbare Material um mindestens 50 % des Volumens ausdehnt, wenn es bei einer Temperatur von 150 °C für mindestens 20 Minuten erhitzt wird,
f) von 0,5 bis 4 Gew.-% mindestens eines Härters auf Basis von Schwefel und/oder Schwefelverbindungen,
wobei die Summe der Bestandteile a) bis f) weniger als 100 Gew.-% ausmacht und der Rest zu 100 Gew.-% von weiteren Bestandteilen oder Hilfsstoffen gebildet wird.

7. Thermisch ausdehnbares Material nach einem oder mehreren der Ansprüche 1 bis 6, wobei die weiteren Bestandteile oder Hilfsstoffe einen oder mehrere der folgenden umfassen:
g) von 5 bis 40 Gew.-% Füllstoffe,
h) von 2 bis 20 Gew.-% Weichmacher,
i) von 1 bis 5 Gew.-% Härtekatalysator,
k) von 0,05 bis 5 Gew.-% Antioxidations- und/oder Stabilisierungsmittel,
l) von 0,05 bis 5 Gew.-% Beschleuniger,
m) von 1 bis 10 Gew.-% Harnstoff.

8. Thermisch ausdehnbares Material nach einem der Ansprüche 1 bis 7, wobei das thermisch ausdehnbare Material, wenn es durch Erhitzen bei einer Temperatur im Bereich von 130 bis 240 °C ausgedehnt wird, einen Speicherelastizitätsmodul E' zwischen 0,1 MPa und 1000 MPa und einen Verlustfaktor von mehr als 0,5 im Frequenzbereich von 0 bis 500 Hz bei einer Temperatur zwischen -10 und +50 °C aufweist.

9. Zerstreuende Vibrationswellenbarriere, die einen Träger mit einer Innenfläche und einer Außenfläche umfasst, wobei eine Beschichtung, die ein thermisch ausdehnbares Material nach einem oder mehreren der Ansprüche 1 bis 8 umfasst, auf mindestens einer der Innenfläche oder der Außenfläche vorliegt.

10. Verfahren zur Verringerung der Übertragung von Vibrationen von einem Vibrationserzeuger zu einem Ort, an dem der Vibrationsgenerator mithilfe eines Strukturelements verbunden ist, wobei das Verfahren das Ausstatten des Strukturelements mit einem Mittel zum Zerstreuen der von dem Vibrationsgenerator erzeugten Vibrationsenergie umfasst, wobei das Mittel eine zerstreuende Vibrationswellenbarriere nach Anspruch 9 umfasst.

11. System zur Dämpfung von Vibrationen in einer Automobilverschlussverkleidungseinheit, das Folgendes umfasst:
a) eine Eingriffsvorrichtung, die mit einer Automobilaußenverkleidungsstruktur in Verbindung steht, und
b) ein thermisch ausdehnbares Material zur Dämpfung von Vibrationen, das über mindestens einem Teil der Eingriffsvorrichtung angeordnet ist und vor der Ausdehnung des ausdehnbaren Materials mit der Eingriffsvorrichtung und nach der Ausdehnung des ausdehnbaren Materials mit einer Oberfläche der Außenverkleidung in Kontakt steht,
wobei das thermisch ausdehnbare Material einem oder mehreren der Ansprüche 1 bis 8 entspricht.

12. Hohlraumfülleinsatz, der zur Schalldämmung und Dämpfung von Vibrationen in einer Hohlstruktur von Nutzen ist, wobei der Hohlraumfülleinsatz ein thermisch ausdehnbares Material und mindestens ein Befestigungselement umfasst, das den Hohlraumfülleinsatz in einer vorher festgelegten Position in der Hohlstruktur halten kann, wobei a) das thermisch ausdehnbare Material sich mindestens um im Wesentlichen den gesamten Umfang des Hohlraumfülleinsatzes herum ausdehnt und b) das thermisch ausdehnbare Material einem oder mehreren der Ansprüche 1 bis 8 entspricht.

13. Verfahren zur Dämpfung von über die Luft und die Struktur übertragenen Vibrationen in einer Hohlstruktur, wobei das Verfahren a) das Anordnen eines Hohlraumfülleinsatzes in der Hohlstruktur, wobei der Hohlraumfülleinsatz ein thermisch ausdehnbares Material und mindestens eine Montagevorrichtung umfasst, die den Hohlraumfülleinsatz in einer vorher festgelegten Position in der Hohlstruktur halten kann, und b) das Erhitzen des thermisch ausdehnbaren Materials auf eine Temperatur umfasst, die dazu wirksam ist, zu verursachen, dass sich das thermisch ausdehnbare Material ausdehnt und mit der Innenfläche der Hohlstruktur in Kontakt kommt, wodurch die Hohlstruktur versiegelt wird, wobei das thermisch ausdehnbare Material nach einem oder mehreren der Ansprüche 1 bis 8 als das thermisch ausdehnbare Material verwendet wird.

14. Beschränkende Schichtdämpfungsstruktur, die eine zu dämpfende Verkleidung, eine Beschränkungsschicht und eine Schicht aus Vibrationsdämpfungsmaterial, die zwischen der Verkleidung und der Beschränkungsschicht eingeschoben ist, umfasst, wobei die Schicht aus Vibrationsdämpfungsschicht aus dem thermisch ausdehnbaren Material nach einem oder mehreren der Ansprüche 1 bis 8 besteht.

15. Fahrzeug, das in oder auf mindestens einem seiner Strukturkomponenten ein thermisch ausdehnbares Material nach einem oder mehreren der Ansprüche 1 bis 8 enthält, wobei das thermisch ausdehnbare Material durch Erhitzen bei einer Temperatur im Bereich von 130 bis 240 °C ausgedehnt wurde.

## Revendications

1. Matériau thermiquement expansible comprenant :
a) de 3 à 40 % en poids d'un premier élastomère thermoplastique ayant une première température de transition vitreuse,
b) de 3 à 40 % en poids d'un deuxième élastomère thermoplastique ayant une deuxième température de transition vitreuse,
dans lequel la première et la deuxième température de transition vitreuse diffèrent d'au moins 10 °C,
c) de 5 à 50 % en poids d'au moins un polymère thermoplastique choisi dans le groupe constitué des polymères et des copolymères avec au moins une double liaison C = C polymérisable,
d) de 0 à 30 % en poids d'au moins une résine collante,
e) au moins un agent d'expansion chimique latent dans une quantité efficace pour amener le matériau expansible à s'expanser d'au moins 50 % en volume lorsqu'il est chauffé à une température de 150 °C pendant au moins 20 minutes, dans lequel la somme des composants a) à e) est inférieure à 100 % en poids, et le reste jusqu'à 100 % en poids est constitué de composants ou adjuvants supplémentaires.

2. Matériau thermiquement expansible selon la revendication 1, dans lequel le premier élastomère thermoplastique a) et/ou le deuxième élastomère thermoplastique b) est choisi dans le groupe constitué par les polyuréthannes, les copolymères séquencés styrène/butadiène, les copolymères séquencés styrène/butadiène hydrogénés, les copolymères séquencés styrène/isoprène, et les copolymères séquencés styrène/isoprène hydrogénés thermoplastiques.

3. Matériau thermiquement expansible selon une ou plusieurs des revendications 1 et 2, dans lequel le premier élastomère thermoplastique a) a une température de transition vitreuse dans la gamme de -25 à 0,0 °C, de préférence dans la gamme de -20 à -5 °C.

4. Matériau thermiquement expansible selon une ou plusieurs des revendications 1 à 3, dans lequel le deuxième élastomère thermoplastique b) a une température de transition vitreuse dans la gamme de 0,1 à 30 °C, de préférence dans la gamme de 4 à 20 °C.

5. Matériau thermiquement expansible selon une ou plusieurs des revendications 1 à 4, dans lequel au moins l'une des conditions suivantes est satisfaite pour les quantités relatives des composants :
le composant a) est présent dans une quantité de 5 à 20 % en poids, de préférence de 8 à 16 % en poids ;
le composant b) est présent dans une quantité de 15 à 40 % en poids, de préférence de 20 à 35 % en poids ;
le composant c) est présent dans une quantité de 10 à 25 % en poids, de préférence de 12 à 20 % en poids ;
le composant d) est présent dans une quantité de 2 à 10 % en poids, de préférence de 3 à 8 % en poids ;
le composant e) est présent dans une quantité de 1 à 20 % en poids, de préférence de 2 à 10 % en poids ;
un agent chimique de durcissement f) est présent dans une quantité de 0,2 à 5 % en poids, de préférence de 0,7 à 2 % en poids,
dans lequel la somme des composants a) à f) est inférieure à 100 % en poids,
et le reste jusqu'à 100 % en poids est constitué de composants ou adjuvants supplémentaires.

6. Matériau thermiquement expansible selon une ou plusieurs des revendications 1 à 5 comprenant :
a) de 5 à 20 % en poids d'un premier élastomère thermoplastique choisi dans le groupe constitué par les polyuréthannes, les copolymères séquencés styrène/butadiène, les copolymères séquencés styrène/butadiène hydrogénés, les copolymères séquencés styrène/isoprène, et les copolymères séquencés styrène/isoprène hydrogénés thermoplastiques, qui a une température de transition vitreuse dans la gamme de -25 à 0,0 °C,
b) de 15 à 40 % en poids d'un deuxième élastomère thermoplastique choisi dans le groupe constitué par les polyuréthannes, les copolymères séquencés styrène/butadiène, les copolymères séquencés styrène/butadiène hydrogénés, les copolymères séquencés styrène/isoprène, et les copolymères séquencés styrène/isoprène hydrogénés thermoplastiques, qui a une température de transition vitreuse dans la gamme de 0,1 à 30 °C
c) de 10 à 25 % en poids d'au moins un polymère thermoplastique choisi dans le groupe constitué par les copolymères d'éthylène/acétate de vinyle et les copolymères d'éthylène/acrylate de méthyle,
d) de 2 à 10 % en poids d'au moins une résine collante,
e) au moins un agent d'expansion chimique latent dans une quantité efficace pour amener le matériau expansible à s'expanser d'au moins 50 % en volume lorsqu'il est chauffé à une température de 150 °C pendant au moins 20 minutes,
f) de 0,5 à 4 % en poids d'au moins un agent de durcissement à base de soufre et/ou de composés du soufre,
dans lequel la somme des composants a) à f) est inférieure à 100 % en poids, et le reste jusqu'à 100 % en poids est constitué de composants ou adjuvants supplémentaires.

7. Matériau thermiquement expansible selon une ou plusieurs des revendications 1 à 6, dans lequel les composants ou adjuvants supplémentaires comprennent un ou plusieurs parmi :
g) de 5 à 40 % en poids de charges,
h) de 2 à 20 % en poids de plastifiant,
i) de 1 à 5 % en poids de catalyseur de durcissement,
k) de 0,05 à 5 % en poids d'anti-oxydant et/ou de stabilisant,
l) de 0,05 à 5 % en poids d'agent accélérant,
m) de 1 à 10 % en poids d'urée.

8. Matériau thermiquement expansible selon l'une quelconque des revendications 1 à 7, dans lequel le matériau thermiquement expansible lorsqu'il est expansé par chauffage à une température dans la gamme de 130 à 240 °C a un module de conservation de Young E' entre 0,1 MPa et 1 000 MPa et un facteur de perte supérieur à 0,5 dans la gamme de fréquences de 0 à 500 Hz à une température comprise entre -10 et +50 °C.

9. Barrière à ondes vibratoires dissipative comprenant un support ayant une surface intérieure et une surface extérieure, dans laquelle un revêtement comprenant un matériau thermiquement expansible selon une ou plusieurs des revendications 1 à 8 est présent sur au moins une de ladite surface intérieure ou ladite surface extérieure.

10. Procédé pour réduire le transfert de vibrations d'un générateur de vibrations vers un emplacement auquel le générateur de vibrations est relié par l'intermédiaire d'un élément structurel, comprenant l'équipement dudit élément structurel d'un moyen pour dissiper l'énergie vibratoire générée par le générateur de vibrations, dans lequel ledit moyen comprend une barrière à ondes vibratoires dissipative selon la revendication 9.

11. Système pour l'amortissement d'une vibration dans un assemblage de panneaux de fermeture d'automobile, comprenant :
a) un dispositif d'intrusion associé à une structure de panneau extérieur d'automobile, et
b) un matériau thermiquement expansible pour amortir une vibration disposé sur au moins une partie dudit dispositif d'intrusion et en contact avec ledit dispositif d'intrusion avant l'expansion dudit matériau expansible, et avec une surface dudit panneau extérieur après l'expansion dudit matériau expansible, dans lequel ledit matériau thermiquement expansible correspond à une ou plusieurs des revendications 1 à 8.

12. Insert de remplissage de cavité utile pour l'isolation acoustique et l'amortissement des vibrations dans une structure creuse, ledit insert de remplissage de cavité comprenant un matériau thermiquement expansible et au moins un élément de fixation capable de maintenir ledit insert de remplissage de cavité dans une position prédéterminée au sein de ladite structure creuse, dans lequel a) ledit matériau thermiquement expansible s'étend au moins sensiblement autour de la périphérie entière dudit insert de remplissage de cavité et b) ledit matériau thermiquement expansible correspond à une ou plusieurs des revendications 1 à 8.

13. Procédé d'amortissement d'une vibration issue de l'air et la structure dans une structure creuse, ledit procédé comprenant a) placer au sein de ladite structure creuse un insert de remplissage de cavité qui comprend un matériau thermiquement expansible et au moins un dispositif de montage capable de maintenir ledit insert de remplissage de cavité dans une position prédéterminée au sein de ladite structure creuse et b) chauffer ledit matériau thermiquement expansible à une température efficace pour amener ledit matériau thermiquement expansible à s'expanser et entrer en contact avec la surface intérieure de ladite structure creuse, scellant par ce moyen ladite structure creuse, dans lequel le matériau thermiquement expansible selon une ou plusieurs des revendications 1 à 8 est utilisé comme ledit matériau thermiquement expansible.

14. Structure d'amortissement d'une couche sous contrainte comprenant un panneau à amortir, une couche de contrainte et une couche de matériau amortisseur de vibrations en sandwich entre ledit panneau et ladite couche de contrainte, dans laquelle la couche de matériau amortisseur de vibrations est constitué du matériau thermiquement expansible selon une ou plusieurs des revendications 1 à 8.

15. Véhicule contenant dans ou sur au moins l'un de ses composants structurels un matériau thermiquement expansible selon une ou plusieurs des revendications 1 à 8, dans lequel le matériau thermiquement expansible a été expansé par chauffage à une température dans la gamme de 130 à 240 °C.
